# EUROPEAN PATENT APPLICATION

(11) **EP 4 672 158 A1**
(43) Date of publication of application: **31.12.2025**
(21) Application number: 25185651.4
(22) Date of filing: 26.06.2025
(51) Int. Cl.: G06T 15/08, G06T 15/20, G06T 17/00

(54) **AUTOMATED GENERATION AND USE OF VISUAL MODELS OF BUILDINGS USING AT LEAST CAPTURED EXTERNAL IMAGERY**

(30) Priority: 26.06.2024 US 202463664661 P
(71) Applicant: MFTB Holdco, Inc., Seattle, Washington 98101 (US)
(72) Inventor: PHAN, Ha, Solana Beach, 92075 (US); Hutchcroft, Will A., Seattle, 98122 (US); Anderson, Stephen N., Kirkland, 98033 (US); Bischof, Ashley, Liverpool, 13090 (US); Cier, Sean P., Ravensdale, 98051 (US); Ulberg, Erik W., Seattle, 98144 (US); GLAZER, Steven Frank, Seattle, 98101 (US)
(74) Representative: Reddie & Grose LLP

(57) **Abstract**

Techniques are described for automatically generating visual model representations of buildings based at least in part on captured external imagery of the buildings, and using the generated building visual models to generate and present new images and optionally in additional manners, such as to improve navigation of a building and/or its surroundings. The described techniques may include acquiring building data from a plurality of exterior acquisition locations at multiple heights and view angles of an exterior of a building (e.g., using a flying drone and/or other flying device that captures the data), generating visual model representation(s) of the building (e.g., a 3D Gaussian Splat model), and using the generated visual model representation(s) to generate and present a new image with a view of the building exterior from a particular pose along with associated user-manipulatable controls.

## Description

### TECHNICAL FIELD

The following disclosure relates generally to techniques for automatically generating visual models encoding appearances of buildings based at least in part on captured external imagery of the buildings and using the generated building visual models to generate and present corresponding new building images with views from particular view poses (locations and orientations), such as to use captured building images and optionally additional data captured at multiple heights and locations around an exterior of a building to generate a 3D Gaussian Splat model or other 3D spatial radiance field model to represent the visual appearance of the building exterior, and to use the generated visual model to render new building images of the building exterior from indicated view poses for presentation.

### BACKGROUND

In various fields and circumstances, such as architectural analysis, property inspection, real estate acquisition and development, remodeling and improvement services, general contracting and other circumstances, it may be desirable to view information about the interior and/or exterior of a house, office, or other building without having to physically travel to the building, including to determine actual as-built information about the building rather than design information from before the building is constructed. However, it can be difficult to effectively capture, represent and use such building information, including to display visual information captured within building interiors and/or of building exteriors to users at remote locations (e.g., to enable a user to fully understand the layout and other details of the interior, including to control the display in a user-selected manner). In addition, while a floor plan or other computer model of a building may provide some information about room layout and other details of a building, such use of floor plans or other computer models has some drawbacks in certain situations, including that floor plans and computer models can be difficult to construct and maintain, to accurately scale and populate with information about room interiors, to visualize and otherwise use (including in relation to its surroundings), etc.

### BRIEF DESCRIPTION OF THE DRAWINGS

Figures 1A-1B are network diagrams illustrating an example system for performing described techniques, including automatically generating visual models encoding appearances of buildings based at least in part on captured external imagery of the buildings and using the generated building visual models to generate and present corresponding new building images with views from particular view poses.
Figures 2A-2L illustrate examples of automated operations for generating visual models encoding appearances of buildings based at least in part on captured external imagery of the buildings and using the generated building visual models to generate and present corresponding new building images with views from particular view poses.
Figure 3 is a block diagram illustrating computing systems suitable for executing an example system that performs at least some of the techniques described in the present disclosure.
Figure 4 illustrates an example flow diagram for a Building Imagery Capture Planner and 3D Visual Representation Determiner and Presenter (BICPVRDP) system routine in accordance with the present disclosure.
Figure 5 illustrates an example flow diagram for an Image/Data Capture and Analysis (IDCA) system routine in accordance with the present disclosure.
Figures 6A-6B illustrate an example flow diagram for a Mapping Information Generation Manager (MIGM) system routine in accordance with the present disclosure.
Figures 7A-7B illustrate an example flow diagram for a Building Information Viewer system routine in accordance with the present disclosure.

### DETAILED DESCRIPTION

The present disclosure describes techniques for using computing devices to perform automated operations related to automatically generating visual models representing appearances of buildings based at least in part on captured external imagery of the buildings, and using the generated building visual models to generate and present corresponding new building images with views from particular view poses, and in some cases subsequently using the generated building visual models and associated information in one or more additional manners, such as to further improve navigation of a building and/or its surroundings. In at least some cases, the described techniques include acquiring building data of an exterior of a building from a plurality of exterior acquisition locations at multiple heights and view angles (*e.g.,* using a flying drone and/or other flying device that captures the data; using another mechanism that raises and/or lowers a camera or other image acquisition device to such acquisition locations during a ground traversal around the building exterior, such an automated scissor lift or a selfie stick that is manually lifted; etc.), with the acquired building data including at least images with visual data (*e.g.,* individual perspective images, video frames, etc., and in at least some cases to collectively include visual coverage of substantially all of the exterior) and optionally other types of data from some or all of the exterior acquisition locations, and optionally further obtaining other additional data from indoor acquisition locations within the building. The acquiring of the building data may in some cases include automatically generating and providing instructions to control the data acquisition (*e.g.,* a flight plan and/or other automated flight instructions or other automated flight control for a flying drone, a drive plan and/or other automated movement instructions or other automated movement control for a drone rolling on or otherwise moving over the ground, instructions for use by a drone operator user, etc.). As one non-exclusive example, at least some of the external data capture may include three-dimensional (3D) capture locations along a surface of a substantially vertical conical shape that is centered on one or more building positions and perpendicular to the ground and with an increasing diameter as height above a ground surface increases, such as above a highest level of the roof, and referred to at times herein as a "capture cone".

After acquiring building data for one or more building areas, the automated operations may further include analyzing the building data to generate one or more visual model representations of the building area(s) that encode visual appearances of them, including in at least some cases to analyze visual data of captured exterior images of a building to generate one or more 3D spatial radiance field building models to represent the building exterior by encoding visual appearances of visible surfaces of the building exterior - the 3D spatial radiance field (3DSRF) building models may, for example, include one or more 3D Gaussian Splat (3DGS) models, one or more NeRF (Neural Radiance Field) models, one or more Sparse Voxel Rasterization (SVRaster) models, one or more Radiant Foam models, etc. For example, in the case of generating a 3DGS model, the techniques may include generating a plurality of 3D Gaussian splat points (*e.g.,* a 3D point cloud with thousands or millions of 3D Gaussian splats) each having an associated 3D position on a visible surface around some or all of the building exterior, such as with each such 3D Gaussian splat point corresponding to a 3D ellipsoid blob with a shape defined by an associated mean x,y,z covariance matrix and encoding a view-dependent radiance function in which the color and transparency of the splat may vary based on an observer's angle of view to that splat's 3D location - in other cases, other types of visual models may be used to represent a building exterior (*e.g.,* one-dimensional, or 1D, Gaussian splats; two-dimensional, or 2D, Gaussian splats; a 3D mesh, such as generated from photogrammetry and/or from Gaussian splats and having interconnected vertices and edges and faces; a 3D volumetric model of a building exterior, such as generated using LiDAR data or other depth data captured from a variety of 3D capture poses having associated GPS data or other location data and in some cases having planar surfaces and/or a 3D point cloud; etc.), whether in addition to or instead of a 3DSRF model. A new exterior building image generated using such a 3DSRF model from a particular 3D view pose (geographical location and orientation) may include some or all of the building exterior that is visible from that view pose, and optionally some or all of a surrounding property on which the building is located (optionally including one or more other buildings on the same property, such as outbuildings) and/or other nearby buildings and properties, such as based on the level of zoom and the particular view pose. Additional details are included below regarding capturing building data for a building and regarding generating and using 3DSRF model visual representation(s) of the building and optionally additional types of building data, and in at least some cases, some or all of the techniques described herein may be performed via automated operations of a Building Imagery Capture Planner and 3D Visual Representation Determiner and Presenter ("BICPVRDP") system, as discussed further below.

In some cases, the analysis of the building data may further include various preprocessing of captured imagery (*e.g.,* motion filtering, blur analysis, etc.), and/or further determining or otherwise generating additional types of building data such as a computer model of the building that encodes types of data other than visual appearance data (*e.g.,* a 2D and/or 3D structural floor plan showing a layout of room shapes and other structures and areas of the building, a 3D mesh representing a shape of an exterior of the building or other type of 3D volumetric model of a building exterior, etc.) and/or other types of building data (*e.g.,* point-of-interest, or POI, locations; particular selected images for particular acquisition poses each having an acquisition location and orientation/direction; video clips; interactive tours of inter-connected building images each having one or more user-selectable links to one or more other of the building images; etc.) each having one or more associated 3D geographical positions and being associated with particular 3D Gaussian splat points in a generated 3DGS model or otherwise with visible surfaces having encoded appearance data in another type of 3DSRF model, or otherwise with 3D geographical locations at the building and its surrounding property.

After generating a 3DSRF model or other visual model representation of a building and optionally additional associated types of building data, the automated operations may further include presenting or otherwise providing generated data for a building in one or more manners, such as to generate and present a new image with a view of the building exterior from a particular view pose (geographical location and orientation) in a displayed GUI (graphical user interface) and to provide user-selectable or otherwise manipulatable controls in the GUI to enable user input to interactively change the view of the building exterior, such as to perform virtual movements from a prior view pose or other default pose to a new current view pose from which a new image is generated and presented, and such as with corresponding new images (also referred to at times herein as a "visual rasterization rendering" or "rasterized building view rendering") being generated for a current view pose in a real-time or near-real-time manner (*e.g.,* with a response time within milliseconds, centiseconds, deciseconds, seconds, etc.) with respect to selection of that current pose (*e.g.,* via user input from the GUI), and/or to otherwise select and display additional types of generated building data (whether in addition to a displayed building exterior image, such as overlaid on it or alongside it, or instead of the displayed building exterior image). In cases in which a 3DGS' splat-based point cloud visual representation of a building's exterior is used, at least some of the 3D Gaussian splat points are used to generate a new rasterized image rendering from a particular view pose, and user-selectable controls may enable a user to change the view pose (location and orientation) in one or more manners (*e.g.*, to change an X,Y,Z view location, such as to pan left/right and/or pan up/down and/or zoom in/out or otherwise change a distance of the view point from one or more points on the building exterior, optionally along with a change in view orientation, such as maintain a view of some or all of the building exterior centered in the new view; to 'orbit' or rotate around a fixed location, such as one or more points on a building exterior, in one or more directions, such as left/right and/or up/down; etc.) - similar operations may be performed for types of building visual model representations other than those based on 3D Gaussian splats. The user-manipulatable controls may be of various types in various cases, such as to include use of a device mouse and/or keyboard and/or touch-sensitive screen and/or other input device, and in some cases may include one or more sliders each having a range of values for one or more visual aspects being controlled (*e.g.,* sliders to individually control each of X, Y and Z view location values; sliders to individually control each of pitch, yaw and roll view orientation values; a single slider that controls a combination of height, pitch and distance-to-building values, such as with some or all of the building exterior being maintained in a center of the view; etc.).

In some cases, selection of a new view pose may be restricted to locations along a surface of a defined substantially vertical conical shape that is centered on one or more building positions and perpendicular to the ground and with an increasing diameter as height above a ground surface increases, referred to at times herein as a "view cone", and in some cases being the same as or similar to a capture cone used for capturing of building data. In addition, while each view pose may have six degrees of freedom (*e.g.,* three degrees of freedom for the location of the view pose, such as with respect to translational surge, sway and heave movements along X, Y and Z axes, and three degrees of freedom for the orientation of the view pose, such as with respect to rotational pitch, yaw and roll movements around the X, Y and Z axes, respectively), in some cases the described techniques may include limiting or restricting the selection or other determination of a new view pose via user input in one or more manners, such as to restrict movement for one or more degrees of freedom (DOFs) - as one specific example, in some cases the described techniques include restricting the six DOF to only two DOF. As one example of limiting or restricting the selection or other determination of a new view pose to two DOF, only lateral and vertical movements along a surface of a defined view cone may be permitted, and with some or all of the building exterior being maintained in a center of the view. As another example of limiting or restricting the selection or other determination of a new view pose to two DOF, the single slider that controls a combination of height, pitch and distance-to-building values may be used as one DOF, with lateral movement to the building exterior at a given height used as another DOF, and with some or all of the building exterior being maintained in a center of the view, including in some cases for the virtual movement restrictions for the selection or other determination of a new view pose to correspond to the surface of a defined view cone. As yet another example of limiting or restricting the selection or other determination of a new view pose to two DOF, a height above ground may be maintained at a substantially constant level, such as at a level corresponding to approximately human eye level (*e.g.,* at a defined height above ground, such as 3 feet or 4 feet or 5 feet or 6 feet or 7 feet or other intermediate defined height between or beyond any such heights), with movements along the X and Y axes being permitted, including movement towards and/or away from the building, and with some or all of the building exterior being maintained in a center of the view. In addition, some view poses may be blocked or otherwise restricted based on their location and/or ability to provide a view of the building exterior, such as to block or otherwise restrict view poses inside another building or structure (*e.g.,* a neighbor's house, an outbuilding, etc.), behind another object blocking the view of the building exterior (*e.g.,* behind a tree), etc.

In cases in which one or more DOF are limited or restricted for selection or other determination of a current view pose, the BICPVRDP system may further in some cases enable some or all such limitations or restrictions to be overcome (*e.g.,* based on additional supplied user input), including to enable moving the view pose towards or away from the building exterior in the first two non-exclusive examples above, and/or to move off of the surface of a view cone if one is being used to restrict or limit virtual movement (*e.g.,* to move directly over the building), and/or to change the orientation so that the building exterior is not shown (*e.g.,* to show other outbuildings and/or other parts of a property on which the building is located, to point outwards from the building to show a surrounding neighborhood or otherwise to show surroundings, etc.). It will be appreciated that, in order to change the orientation so that the building exterior is not shown, visual data of the other areas to be shown will first be captured and analyzed in order to encode corresponding visual appearance data in one or more 3DSRF models or other visual models, such as to have such a model for a property as a whole, and/or for each building or other structure on a property, and/or for a larger area around the building that includes some or all of one or more other properties or more generally for a surrounding neighborhood, etc. - as one non-exclusive example, a drone or other device used to acquire data may each have multiple cameras including one facing towards the building exterior and one or more others facing outwards or otherwise away from it, such as to use images from the camera facing towards the building exterior for a first 3DSRF model that encodes visual appearance data for the building exterior, and to use other images from other cameras for one or more other 3DSRF models that encode visual appearance data for surroundings of the building, while in other cases a device with a single camera will capture different images in different orientations for some or all capture poses, including images in which the building exterior is centered and others in which the building exterior is not centered (*e.g.,* in which the building exterior is not visible).

In addition, the presentation of building information and the control of new view building poses may be performed in other manners in other cases. As one non-exclusive example, the virtual movement may include moving between ground-level view poses and aerial view poses, whether via a change from one type of pose to another, or merely via virtual movements that change heights - in at least some such cases, in order to facilitate the generation of new images from both ground-level and aerial poses, and/or in order to assist the analysis of visual data of images captured at different heights to improve alignment between captured visual data, the data capture activities may continue between different height levels, such as if a drone flying device captures visual data at multiple substantially horizontal levels or orbits, and further captures other visual data as it ascends and/or descends between such horizontal levels and/or as it ascends and/or descends between a lowest of such horizontal levels to a lower ground level or to the ground surface. As another non-exclusive example, the presentation of information for a building may in some cases include presenting information about numerous buildings and receiving user input to select a particular building for which to present further information, such as to begin with an image showing multiple properties and their buildings *(*e.g., for an entire neighborhood, city, county, state, country, etc.), and to use user input to zoom in or otherwise reduce the visual coverage until a particular building is identified, after which building-specific data for that building is shown.

In addition, various types of additional building data may be overlaid on such a rasterized new image building view rendering of a building exterior from a particular view pose in some cases *(*e.g., locations of POIs, optionally with additional corresponding information displayed or displayable upon user selection; visualizations of information from a building's interior, such as corresponding to some or all of a building floor plan; information about nearby features of a surrounding neighborhood and/or nearby buildings or properties; etc.), such as based on geographical locations of such additional building data that are associated with particular 3D Gaussian splats in a 3DGS model or that are associated with particular visible surfaces for which appearance data is encoded in other types of 3DSRF models and/or with other building locations, and user-manipulatable controls may further enable a user to switch from such a generated new image of a building exterior to one or more other types of building data (*e.g.*, particular images; videos; a floor plan or other computer model; an interactive tour of inter-linked images; a generated new image of a building interior, including based on virtual movements that transition from an exterior ground-level pose through a building external doorway or otherwise through an external surface of the building, or based on other virtual movements that transition from an exterior aerial pose (*e.g.,* above a ground-level view, such as above 7 feet or 10 feet or other defined height, etc.) through an external surface of the building; etc.). Such use of 3DSRF model visual representations (*e.g.,* 3D Gaussian splat point cloud visual representations) and/or other types of building visual representations may in some cases be used for representing and presenting views of building interiors, such as using one or more corresponding 3DSRF models generated for a building exterior (of a single 3DSRF model that encodes visual appears for both a building's interior and exterior), and whether in addition to or instead of building exteriors.

In addition, in some cases, the capture of visual data to use for generating a 3DSRF model or other visual model for a building may include multiple of drone-based aerial capture, ground-level capture, and additional capture in other manners, such as to further capture or obtain other overhead imagery of a building and/or a surrounding property *(*e.g., from an airplane, from a satellite, etc.) that is used in the generation of a building's 3DSRF model, including to align elements of the other overhead imagery with other visual data captured in a different manner (*e.g.,* from drone-based aerial capture, such as along the defined capture cone or in airspace over the building perimeter). Furthermore, when performing ground-level data capture from one or more heights, in at least some cases the heights and/or capture poses are chosen to enable visual coverage of substantially all of the exterior of the building, including the roof, and/or to capture visual data of the building at a given height from multiple distances to the building exterior. In addition, in some cases, the data captured includes not only visual data in the visible light spectrum but one or more other types of energy that is used to generate one or more corresponding models of the building, whether as part of a 3DSRF model generated for the building or in one or more other models - non-exclusive examples of such other types of energy include non-visible light (*e.g.,* infrared, ultraviolet, etc.), electromagnetic fields, wireless signals (*e.g.,* wireless transmissions of one or more types), other forms of radiation, soundwaves, etc. Such other types of energy may be presented in various manners, including as information overlaid on new images generated from a 3DSRF model of the building (*e.g.,* in a manner similar to POI location data), as part of other models that are generated and displayed in image form or other format, etc. In some cases, further analysis of captured visual data of a building exterior may also be performed to identify visible objects and/or other building attributes (*e.g.,* colors, types of materials, etc.), such as by performing semantic segmentation, and corresponding object/attribute data may be included in or associated with a 3DSRF building model that is generated (*e.g.,* to associate particular Gaussian splat points in a 3DGS model with object and/or attribute data for a visible surface on which that splat point exists, or to otherwise associate object and/or attribute data for visible surfaces with the encoded appearance data for such visible surfaces) - if so, such object and/or attribute data may be used to retrieve or otherwise identify corresponding parts of a building, such as to receive a request for an asphalt shingle roof and/or windows and/or beige stucco via the GUI and receive corresponding information (*e.g.,* one or more images showing such parts of the building, summary or other identification of such object or attribute data for the building, etc.).

Additional details are included below regarding the automated acquisition of building data for a building, automated generation of visual model representation(s) of a building and optionally additional types of building data, and automated presentation or other providing of generated building images with views from indicated view poses and optionally additional types of building data. In addition, the generated building visual model representations and other generated building data may be further used in additional manners in some cases, such as to further improve navigation of a building and/or its surroundings (*e.g.,* by an automated navigable device moving under its own power), as also discussed in greater detail below.

The described techniques provide various benefits in various cases, including to allow visual representations of exteriors of buildings or other structures and optionally associated computer models of the buildings/structures to be automatically generated based at least in part on exterior images acquired for the buildings/structures, and/or to allow such generated exterior visual representations and/or the associated computer models to be augmented with additional information about the buildings/structures and optionally surroundings (*e.g.,* yards and outbuildings and other parts of a surrounding property on which a building is located, nearby buildings and other parts of a surrounding neighborhood, etc.). In addition, the use of 3D Gaussian Splat models with associated 3D Gaussian splat point clouds or other types of 3D spatial radiance field models with encoded visual appearance data in some cases provides highly accurate visual representations from any selected view point, including to enable user-selected modifications to a current view point and to provide real-time or near-real-time visual modifications with corresponding rasterized exterior views from the modified view points being rendered and displayed. Non-exclusive examples of additional benefits include the ability to provide feedback during capture of one or more target images acquired for a building or other structure to an operator of the camera device, including to optionally allow the user to determine one or more other areas of the building at which to acquire one or more further target images. Furthermore, the described automated techniques allow such acquisition of building data and its use in generating and providing visual representations of building exteriors and associated additional building data to be performed more quickly and accurately than previously existing techniques, including by using information acquired from the actual building environment (rather than from plans on how the building should theoretically be constructed), as well as enabling the capture of changes to structural elements that occur after a building is initially constructed. Such described techniques further provide benefits in allowing improved automated navigation of a building by mobile devices (*e.g.,* semi-autonomous or fully autonomous vehicles), including to significantly reduce computing power and time used to attempt to otherwise learn a building's layout and/or location and/or exterior's surroundings. In addition, in some cases the described techniques may be used to provide an improved GUI in which a user may more accurately and quickly obtain information about a building's interior (*e.g.,* for use in navigating that interior) and/or exterior and/or surrounding areas, including in response to search requests, as part of providing personalized information to the user, as part of providing value estimates and/or other information about a building to a user, etc. Various other benefits are also provided by the described techniques, some of which are further described elsewhere herein.

As noted above, the BICPVRDP system may in some cases perform further automated operations to acquire indoor images and/or other data for a building, and to analyze such data to generate a floor plan model and/or other mapping information for the building (*e.g.,* a 2D model of the building's interior without wall height data, such as an orthographic overhead or top view; a 3D model of the building's interior; a linked group of target images with pairwise inter-image directional information; etc.), such as by using visual data of acquired images and their determined acquisition locations to identify structural elements such as walls and doorways and windows and non-doorway wall openings, to determine the relative position of each image's acquisition location to such identified structural elements (*e.g.,* within a local coordinate system for that image), to determine room shapes based on the identified structural elements and to identify each image's acquisition location within one of the room shapes (*e.g.,* within a local coordinate system for that room), and to position such room shapes relative to each other to form at least a partial floor plan in a common local coordinate system for the floor plan, or to otherwise determine relative positions of acquisition locations of images without such a floor plan based at least in part on visual overlap between the images' visual data - in at least some such cases, the automated analysis and use of acquired interior images and/or other data is further performed without having or using any acquired depth data from any depth sensors or other distance-measuring devices about distances from an acquisition location to walls or other objects in the surrounding building, while in other cases such depth data may be acquired and used. Such generated floor plans and/or other mapping information may be further used in various manners in various cases, such as for controlling navigation of mobile devices (*e.g.,* autonomous vehicles), for display or other presentation on one or more client devices in corresponding GUIs (graphical user interfaces), etc.

In addition, automated operations of the BICPVRDP system may include automatically mapping target images (*e.g.,* target panorama images, perspective rectilinear photos and other images, etc.) acquired at a building (*e.g.*, in one or more rooms or other defined areas) to other absolute location data acquired at the building separately from the acquisition of the images (*e.g.,* GPS data or other GNSS, or global navigation satellite system, data), and using such mappings to determine associated absolute locations for a visual representation of the building (*e.g.,* a 3D point cloud of 3D Gaussian splat points) and/or a floor plan generated from the target images, such as to enable GPS location data or other absolute location data acquired at one or more data capture locations at the building to be extended to other locations that are determined at least in part from analysis of visual data of the one or more target images (*e.g.,* locations of a room shape of a surrounding room, such as locations of at least walls of that room). The absolute location data for a data capture location may have various forms and may be determined in various manners in various cases. In addition, such a mobile capturing device may have various forms in various cases, including as a mobile computing device (*e.g.,* a smart phone, a tablet or laptop computer, etc.) that includes computing capabilities and that may be used to perform at least some of the automated operations.

The determination of the position of an image acquisition location at which an image acquisition device acquires one or more target images may be performed in various manners in various cases. In at least some cases, for each of some or all such captured target images, the image acquisition device and/or other associated analysis device(s) may provide additional data, such as to in some cases provide a linear stream of image acquisition events - non-exclusive examples of other data that may optionally be associated with each of some or all events and their associated target images include pose data for the image acquisition device and corresponding resulting target image acquired for that event, objects detected in visual data of the target image, metadata of one or more types for the target image acquisition (*e.g.,* image acquisition device model and/or type, software type and/or version used on the image acquisition device, etc.), operator user actions associated with the target image acquisition, a location of the target image within a room shape or otherwise within a floor plan in a local coordinate system for that room shape or floor plan, etc.

As noted above, automated operations of the BICPVRDP system may further include automatically presenting a building floor plan having associated absolute location data using surrounding real-world data for the associated absolute location(s) of the building floor plan. As one non-exclusive example, such a 2D or 3D floor plan model may be overlaid on top of an exterior image or other visual representation of the building (*e.g.,* to fit the floor plan to the exterior boundary of the building as is visible in an overhead or street-level image of the building that is part of the map or overlaid on the map). In addition, when a building has multiple stories, the information from the multiple stories may be presented in various manners, such as to show internal aspects of the different stories simultaneously but using differing visual aspects to distinguish them (*e.g.,* different colors, patterns, etc.), to show different stories sequentially (*e.g.,* automatically, such as a fixed amount of time per story; as directed by manual instructions, etc.) or as selected by a user, to show (or highlight) different stories at different zoom levels (*e.g.,* show the top story at the initial zoom level and expose lower stories as the zoom level increases), etc. Furthermore, such a displayed map may be interactive in at least some cases, such as to enable zooming and/or scrolling operations through GUI (graphical user interface) manipulations such as via mouse and/or keyboard and/or touch screen inputs, including actions such as finger pinches. In addition, various details about surrounding areas outside of the building's floor plan may be displayed on the map in various manners, such as to highlight neighborhood information or other nearby information of one or more types (*e.g.,* to include pointers or other directional information for external locations such as schools, hospitals, highways, parks, etc.) - in some cases, some or all of the neighborhood/nearby information may be overlaid on the visual representation of the floor plan on the map or otherwise included on the floor plan's visual representation, as well as to include information on the floor plan's visual representation such as the location of adjacent roads, trees, other buildings, etc. (*e.g.,* based on information extracted from the map or otherwise available, such as from public data sources or other data sources), such as to provide a 'site-plan' visualization. Furthermore, the types of additional information displayed may in some cases be varied with the zoom level and/or based on user selection or preferences, and other types of information from external surrounding locations may similarly be added to the floor plan model and/or its visual representation (*e.g.,* as displayed information visible through windows, with directional information inside the floor plan model to particular external surrounding locations, etc.), a compass rose or other indication of geographical north and/or one or more other directions may similarly be added to the floor plan model and/or its visual representation, etc. Additional details are included below related to presenting a building floor plan with associated absolute location data using surrounding real-world data.

As noted above, the generation of a partial or complete floor plan for a building may include analyzing the visual data of one or more target images captured by a camera device at one or more image acquisition locations in a room of the building (or other defined area at the building) to determine at least some of the walls of that room that are visible in that visual data and to combine multiple pieces of determined wall data to form a room shape for the surrounding room (or other shape of another defined area) - such a determination of the walls may, for example, include modeling the walls as planar surfaces and/or as groupings of 3D data points, and the resulting determined room shape may be a 3D (three-dimensional) and/or 2D (two-dimensional) room shape based at least in part on the walls and their inter-wall borders, as well as similarly modeling some or all of the floor and/or ceiling *(*e.g., for 3D room shapes) in at least some cases. For example, the described techniques may, in at least some cases, include using one or more trained neural networks or other techniques to estimate a 3D room shape shown in one or more such target images - as non-exclusive examples, such 3D room shape estimation may include one or more of the following: using a trained convolutional neural network or other analysis technique to take the target image(s) as input and to estimate a 3D point cloud of the walls and other surfaces of the enclosing room from the visual contents of the target image and/or to estimate a piecewise planar representation (*e.g.,* 3D walls and other planar surfaces) of the enclosing room from the visual contents of the target image(s); using a trained neural network or other analysis technique to take the target image(s) as input and to estimate wireframe structural lines of the enclosing room from the visual contents of the target image (*e.g.,* structural lines to show one or more of borders between walls, borders between walls and ceiling, borders between walls and floor, outlines of doorways and/or other inter-room wall openings, outlines of windows, etc.); using a trained neural network or other analysis technique to detect wall structural elements (*e.g.,* windows and/or sky-lights; passages into and/or out of the room, such as doorways and other openings in walls, stairs, hallways, etc.; borders between adjacent walls; borders between walls and a floor; borders between walls and a ceiling; corners (or solid geometry vertices) where at least three surfaces or planes meet; etc.) in the visual contents of the target image(s) and to optionally detect other fixed structural elements (*e.g.,* countertops, bath tubs, sinks, islands, fireplaces, etc.) and to optionally generate 3D bounding boxes for the detected elements; etc. While the camera device is referred to in the singular at times herein, it will be appreciated that multiple camera devices may be used in some cases for a given building, such as different camera devices that acquire different target images at different times (*e.g.,* during different image acquisition sessions and/or at different image acquisition locations, whether in the same or different rooms or other defined areas as one or more other camera devices), different camera devices that acquire different target images at the same time (*e.g.,* during the same image acquisition session and at different or the same image acquisition locations, whether in the same or different rooms or other defined areas as one or more other camera devices), etc.

In addition, in some cases, the analysis of the visual data of one or more target images captured by one or more camera devices at one or more image acquisition locations in a room (or other defined area) may be combined with additional room shape data that is determined from analysis of other data captured by one or more mobile devices at one or more other data capture locations in that room (or other defined area), with non-exclusive examples including the following: analyzing additional visual data of additional images captured by the mobile device to determine information about at least some walls of a surrounding room (and optionally some or all of the floor and/or the ceiling), optionally in combination with IMU data to generate a 3D point cloud of at least some of the room shape; analyzing depth data captured by the mobile device using one or more sensors that measure depth or otherwise determine distances to walls or other surrounding objects; etc. In at least some cases, the operations of the mobile device may be based at least in part on performing a SLAM (Simultaneous Localization And Mapping) and/or SfM (Structure from Motion) and/or MVS (multiple-view stereovision) analysis, such as by using motion data from IMU sensors on the mobile computing device in combination with visual data from one or more image sensors on the mobile computing device, including in at least some such cases to use the additional data captured by the mobile computing device to generate an estimated three-dimensional ("3D") shape of the enclosing room (*e.g.,* based on a 3D point cloud with a plurality of 3D data points and/or estimated planar surfaces of walls and optionally the floor and/or ceiling) - in some such cases, these automated operations are performed without using any depth sensors or other distance-measuring devices about distances from the mobile computing device to walls or other objects in the surrounding room, while in other cases the mobile computing device (or other additional associated mobile device) may capture depth data to walls of the surrounding room and use that captured depth data as part of determining the position of the mobile computing device. The automated determination of the position for the mobile computing device may further be performed in some cases as part of generating a travel path of the mobile computing device through the enclosing room (*e.g.,* using one or more of a SLAM, SfM and/or MVS analysis), whether instead of or in addition to generating a 3D shape of the enclosing room - in other cases, the automated determination of the position for the mobile computing device may be based at least in part on other analyses, such as via Wi-Fi triangulation, Visual Inertial Odometry ("VIO"), etc. Additional details are included below related to determining room shapes and to combining room shapes to form a partial or complete building floor plan.

As noted above, a building floor plan having associated room shape information for some or all rooms of the building may be generated and used in at least some cases, and may have various forms in various cases, such as a 2D (two-dimensional) floor map model of the building (*e.g.,* an orthographic top view or other overhead view of a schematic floor map that does not include or display height information) and/or a 3D (three-dimensional) or 2.5D (two and a half-dimensional) floor map model of the building that does display height information. Furthermore, in some cases, a target image (and optionally additional images) may be acquired outside of one or more buildings, such as in one of multiple separate areas of one or more properties (*e.g.,* for a house, a garden, patio, deck, back yard, side yard, front yard, pool, carport, dock, etc.) that each has a previously or concurrently determined area shape (*e.g.,* a 3D shape, a 2D shape, etc.) - if so, the shape of a surrounding area of the image may similarly be automatically determined and included as part of a building floor plan using the techniques described herein.

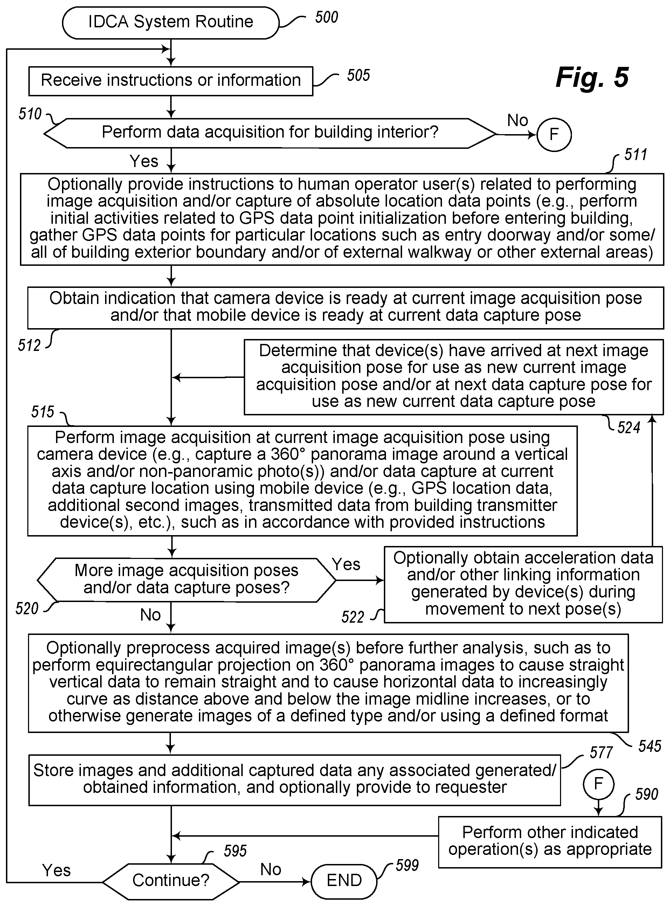

As noted above, in at least some cases, some or all of the target images acquired for a building may be panorama images that are each acquired at one of multiple acquisition locations in or around the building, such as to generate a panorama image at each such acquisition location from one or more of a video captured at that acquisition location (*e.g.,* a 360° video taken from a smartphone or other mobile device held by a user turning at that acquisition location), or multiple images captured in multiple directions from the acquisition location (*e.g.,* from a smartphone or other mobile device held by a user turning at that acquisition location; from automated rotation of a device at that acquisition location, such as on a tripod at that acquisition location; etc.), or a simultaneous capture of all the image information for a particular acquisition location (*e.g.,* using one or more fisheye lenses), etc. It will be appreciated that such a panorama image may in some situations be represented in a spherical coordinate system and provide up to 360° coverage around horizontal and/or vertical axes (*e.g.,* 360° of coverage along a horizontal plane and around a vertical axis), while in other cases the acquired panorama images or other images may include less than 360° of vertical coverage (*e.g.,* for images with a width exceeding a height by more than a typical aspect ratio, such as at or exceeding 21:9 or 16:9 or 3:2 or 7:5 or 4:3 or 5:4 or 1:1, including for so-called 'ultrawide' lenses and resulting ultrawide images). In addition, it will be appreciated that a user viewing such a panorama image (or other image with sufficient horizontal and/or vertical coverage that only a portion of the image is displayed at any given time) may be permitted to move the viewing direction within the panorama image to different orientations to cause different subset images (or "views") to be rendered within the panorama image, and that such a panorama image may in some situations be represented in a spherical coordinate system (including, if the panorama image is represented in a spherical coordinate system and a particular view is being rendered, to convert the image being rendered into a planar coordinate system, such as for a perspective image view before it is displayed). Furthermore, acquisition metadata regarding the capture of such panorama images may be obtained and used in various manners, such as data acquired from IMU sensors or other sensors of a mobile device as it is carried by a user or otherwise moved between acquisition locations - non-exclusive examples of such acquisition metadata may include one or more of acquisition time; acquisition location, such as GPS coordinates or other indication of location; acquisition direction and/or orientation; relative or absolute order of acquisition for multiple images acquired for a building or that are otherwise associated; etc., and such acquisition metadata may further optionally be used as part of determining the images' acquisition locations in at least some cases, as discussed further below. Additional details are included below regarding automated operations of device(s) implementing an Image/Data Capture and Analysis (IDCA) system involved in acquiring images and optionally acquisition metadata, including with respect to Figure 5 and elsewhere herein.

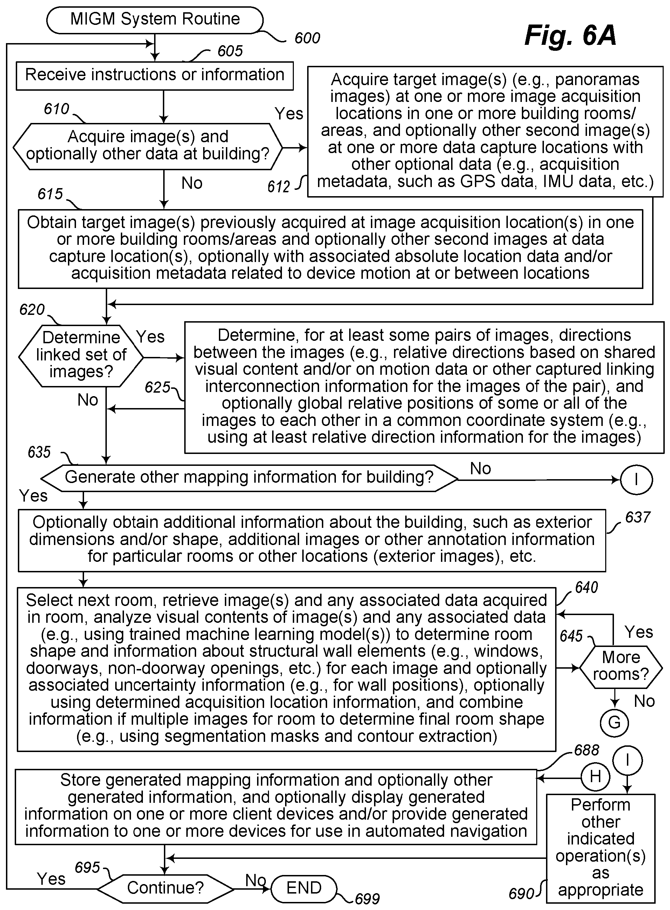

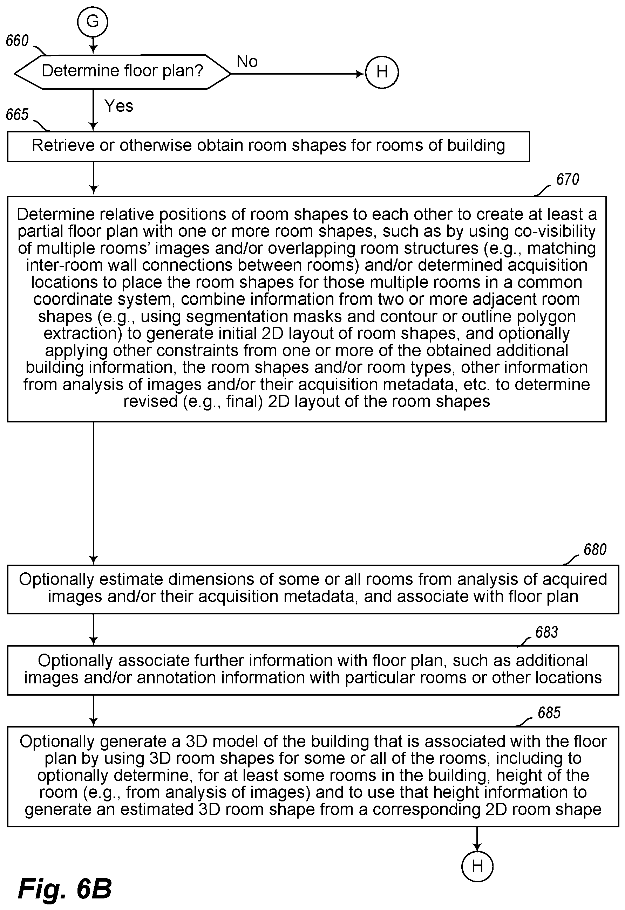

As is also noted above, shapes of rooms of a building may be automatically determined in various manners in various cases. For example, in at least some cases, a Mapping Information Generation Manager (MIGM) system may analyze various images acquired in and around a building in order to automatically determine room shapes of the building's rooms (*e.g.,* 3D room shapes, 2D room shapes, etc.) and to automatically generate a floor plan for the building. As one example, if multiple images are acquired within a particular room, those images may be analyzed to determine a 3D shape of the room in the building (*e.g.,* to reflect the geometry of the surrounding structural elements of the building) - the analysis may include, for example, automated operations to 'register' the camera positions for the images in a common frame of refence so as to 'align' the images and to estimate 3D locations and shapes of objects in the room, such as by determining features visible in the content of such images (*e.g.*, to determine the direction and/or orientation of the capture device when it took particular images, a path through the room traveled by the capture device, etc., such as by using SLAM techniques for multiple video frame images and/or other SfM techniques for a 'dense' set of images that are separated by at most a defined distance (such as 6 feet) to generate a 3D point cloud for the room including 3D points along walls of the room and at least some of the ceiling and floor of the room and optionally with 3D points corresponding to other objects in the room, etc.) and/or by determining and aggregating information about planes for detected features and normal (orthogonal) directions to those planes to identify planar surfaces for likely locations of walls and other surfaces of the room and to connect the various likely wall locations (*e.g.,* using one or more constraints, such as having 90° angles between walls and/or between walls and the floor, as part of the so-called 'Manhattan world assumption') and form an estimated room shape for the room. After determining the estimated room shapes of the rooms in the building, the automated operations may, in at least some cases, further include positioning the multiple room shapes together to form a floor plan and/or other related mapping information for the building, such as by connecting the various room shapes, optionally based at least in part on information about doorways and staircases and other inter-room wall openings identified in particular rooms, and optionally based at least in part on determined travel path information of a mobile computing device between rooms. Similar techniques may be used for determining inter-location pose information for images captured at multiple locations, as discussed in greater detail elsewhere herein. Additional details are included below regarding automated operations of device(s) implementing an MIGM system involved in determining room shapes and combining room shapes to generate a floor plan, including with respect to Figures 6A-6B and elsewhere herein.

For illustrative purposes, some examples are described below in which specific types of information are acquired, used and/or presented in specific ways for specific types of structures and by using specific types of devices - however, it will be understood that the described techniques may be used in other manners in other cases, and that the invention is thus not limited to the exemplary details provided. As one non-exclusive example, while building exterior visual representations and/or interior floor plans may be generated in some examples that do not include detailed measurements (*e.g.,* for particular rooms, for the overall building structure, etc.), it will be appreciated that other types of mapping information may be similarly generated in other cases, including for other structures or layouts) separate from buildings. As another non-exclusive example, while some examples discuss obtaining and using additional data from a mobile computing device that is separate from a camera device that captures a target image, in other cases the one or more devices used in addition to the camera device may have other forms, such as to use a mobile device that acquires some or all of the additional data but does not provide its own computing capabilities (*e.g.,* an additional 'non-computing' mobile device), multiple separate mobile devices that each acquire some of the additional data (whether mobile computing devices and/or non-computing mobile devices), etc. In addition, the term "building" refers herein to any partially or fully enclosed structure, typically but not necessarily encompassing one or more rooms that visually or otherwise divide the interior space of the structure - non-limiting examples of such buildings include houses, apartment buildings or individual apartments therein, condominiums, office buildings, commercial buildings or other wholesale and retail structures (*e.g.,* shopping malls, department stores, warehouses, etc.), etc. The term "acquire" or "capture" as used herein with reference to a building interior, acquisition location, or other location (unless context clearly indicates otherwise) may refer to any recording, storage, or logging of media, sensor data, and/or other information related to spatial and/or visual characteristics and/or otherwise perceivable characteristics of the building interior or subsets thereof, such as by a recording device or by another device that receives information from the recording device. As used herein, the term "panorama image" may refer to a visual representation that is based on, includes or is separable into multiple discrete component images originating from a substantially similar physical location in different directions and that depicts a larger field of view than any of the discrete component images depict individually, including images with a sufficiently wide-angle view from a physical location to include angles beyond that perceivable from a person's gaze in a single direction (*e.g.,* greater than 120° or 150° or 180°, etc.), in contrast to a "perspective rectilinear" image or photo that has a sufficiently narrow-angle view from a physical location to include angles within that perceivable from a person's gaze in a single direction (*e.g.,* less than 90° or 60° or 45°, etc.). The term "sequence" of acquisition locations, as used herein, refers generally to two or more acquisition locations that are each visited at least once in a corresponding order, whether or not other non-acquisition locations are visited between them, and whether or not the visits to the acquisition locations occur during a single continuous period of time or at multiple different times, or by a single user and/or device or by multiple different users and/or devices. In addition, various details are provided in the drawings and text for exemplary purposes, but are not intended to limit the scope of the invention. For example, sizes and relative positions of elements in the drawings are not necessarily drawn to scale, with some details omitted and/or provided with greater prominence (*e.g.,* via size and positioning) to enhance legibility and/or clarity. Furthermore, identical reference numbers may be used in the drawings to identify similar elements or acts.

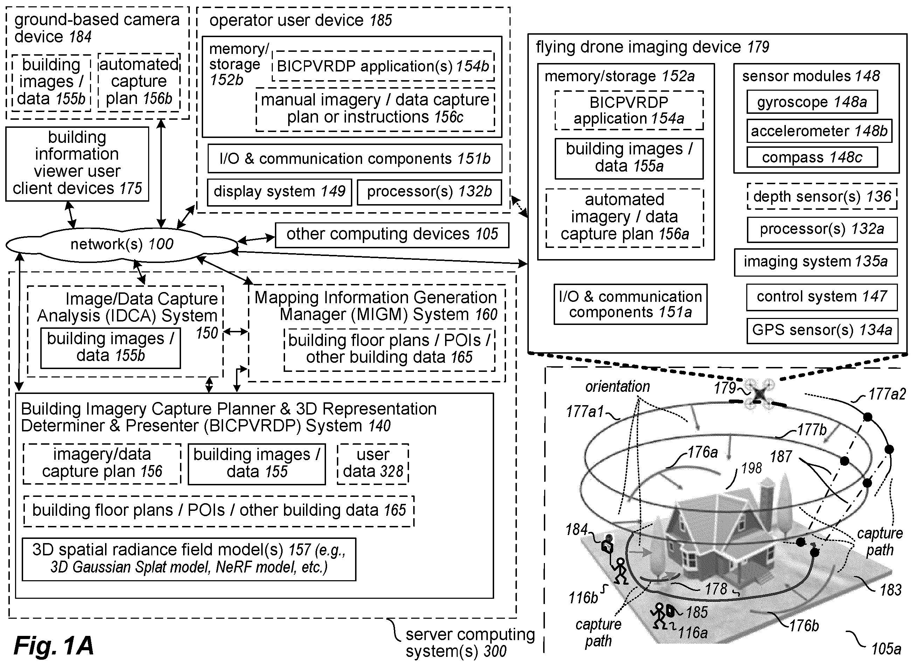

Figure 1A includes an example block diagram with information 105a about various computing devices and systems that may participate in the described techniques in some cases, such as with respect to an illustrated example of part of a building 198 (in this example, a house) on associated property 183, and by the Building Imagery Capture Planner and 3D Visual Representation Determiner and Presenter ("BICPVRDP") system 140 executing at least in part on one or more server computing systems 300 in this example.

In the illustrated example, a flying drone imaging device 179 may be used to capture a variety of exterior images of the building 198 from a variety of positions, such as by following a flight path that includes one or more substantially circular or elliptical paths 177 to encircle all sides of the building at one or more heights (*e.g.,* three paths at three heights) and to capture images and/or other data at some or all acquisition location points along the substantially circular or elliptical paths using one or more cameras and/or other sensors that are carried by or otherwise part of the drone 179 and are part of an imaging system 135a of the drone 179 (*e.g.,* using an acquisition pose at each acquisition location that points toward a center of the building or that otherwise includes some or all of the visible portion of the building from that acquisition location within a view angle or other capture angle of the one or more cameras and/or other sensors), and optionally to further include one or more partial substantially circular or elliptical paths 176 (*e.g.,* 176a, 176b, etc.) to encircle only part of the building at one or more heights and to capture images and/or other data at some or all points along the partial substantially circular or elliptical paths, such as if a full substantially circular or elliptical path at those heights is not possible (*e.g.,* closer to the ground due to obstructions, and with the obstructions in at least some cases be automatically detected and avoided, such as using sensors on the flying drone device). As discussed in greater detail elsewhere herein, such substantially circular or elliptical paths 177 (*e.g.,* 177a1 and/or 177a2, 177b, an additional path 177c that is not shown, etc.) may be performed as part of a capture cone, such as with each path increasing in horizontal distance from a vertical projection of the building exterior as the height above the ground surface increases, with the ground surface used herein to include any type of material (*e.g.,* dirt, concrete, asphalt, grass, water, etc.), as illustrated 187 in part using paths 178a, 177b and 177a2 - in at least some cases, path 177a1 outside of the capture cone may not be used, while in other cases other paths outside of the capture cone may also be used, such as to fly in part or in whole in airspace over the building. In the illustrated example, the drone 179 may follow its flight path and acquire its corresponding images and optionally other data in an automated manner in some cases, such as using an automated imagery/data capture plan 156a generated by the BICPVRDP system 140 executing on one or more server computing systems 300 and transmitted or otherwise provided to the drone 179, while in other cases the flight path and/or data acquisition operations of the drone 179 may be controlled in part or in whole via an operator user 116a of an associated operator user device 185 in communication with the drone 179. In some cases, whether instead of or in addition to the use of the flying drone 179 to capture the exterior images and/or other data, a person 116b and/or automated mechanism (not shown) on the ground may capture exterior images and/or other data for the building 198, such as using an automated imagery/data capture plan 156b generated by the BICPVRDP system 140 for an automated capture device, and such as by lifting a camera 184 to different heights at multiple locations around the building 198 (*e.g.,* using a selfie stick or automated scissor lift or other mechanism), including while making traversal paths 178 around some or all of the exterior, including towards and/or away from the building exterior *(*e.g., to capture ground-level close-up images of some or all of the building exterior, such as from 1 foot or 3 feet or 5 feet or 10 feet or any other distance between or beyond such distances, to enable later new images to be generated that include similar close-up data). In addition, in cases in which a camera operator user 116b on the ground and/or a drone operator user 116a participates in the capture of at least some of the images and optionally other data for the exterior of the building, the BICPVRDP system may in some cases generate and transmit corresponding instructions to device 185 for the user(s), such as a manual imagery/data capture plan 156c. As the drone 179 captures building exterior images and/or other data, the captured data 155a (images and optionally additional data) is optionally associated with other capture metadata (*e.g.,* GPS data for the acquisition locations from GPS sensors 134a; pose data for the acquisition locations from IMU, or inertial measurement unit, sensor modules 148; depth data to the building from the acquisition locations, such as from optional depth sensors 136; etc.) and stored in memory/storage 152a of the drone 179 in this example before being transmitted to the BICPVRDP system 140 (optionally via the drone operator device 185). Similarly, if the camera device 184 is used to capture at least some of the images and optionally other data for the exterior of the building, the resulting captured data 155b may similarly be optionally associated with some or all of the same types of capture metadata and stored on the camera device before being transmitted to the BICPVRDP system 140. In addition, in the illustrated example, an optional Image/Data Capture Analysis (IDCA) system may similarly direct the capture of images and optionally other data 155c (not shown) within an interior of the building, optionally associate that data 155c with some or all of the same types of capture metadata, and transmit that data 155c to the BICPVRDP system 140, as discussed in greater detail elsewhere herein. The building images/data 155 used by the system 140 may thus include the building images/data 155a and/or 155b and/or 155c.

The BICPVRDP system 140 obtains the images and other captured data 155 and uses it to determine one or more 3D building visual model representations 157 for the exterior of the building 198, such as one or more 3DSRF models (*e.g.,* a 3DGS model with a 3D point cloud of 3D Gaussian splat points). In at least some cases, the system 140 determines initial acquisition pose information for the captured images (*e.g.,* using SLAM and/or SfM techniques), and uses that initial acquisition pose information to initialize an optimization process for initial generated 3D Gaussian splats to further refine the aisle acquisition pose information for the splats (*e.g.,* an optimization process that uses gradient descent and/or a heuristic algorithm to optimize the 3D Gaussian splats' 3D locations and/or included Gaussians). In addition, in some cases, the BICPVRDP system may further generate one or more background models or other surroundings models to represent surroundings of the building (*e.g.,* to encode visual appearance data for a property on which the building is located, for one or more outbuildings or other structures on the same property, etc.) separate from the 3D building visual model representation(s), such as for use in rendering visual data surrounding the building. In some cases, an optional Mapping Information Generation Manager (MIGM) system 160 further uses the visual data of at least captured interior images to determine room shapes of surrounding rooms, optionally in combination with some of the additional captured data (*e.g.,* device motion data for the mobile data capture device), and combines the determined room shapes to generate associated building floor plans 165, optionally along with the identification of other building data from the building images / data 155 (*e.g.,* POIs), although in other cases the system 140 may directly control some or all such generation of building floor plans, whether in addition to or of the MIGM system. The BICPVRDP system 140 also in some cases automatically determines particular GPS location data or other absolute location data to associate with some or all pieces of generated building data 165 and optionally with some or all of the generated building visual model representation 157 (*e.g.,* with some or all 3D Gaussian splat points in a 3DGS model). After the one or more 3D building visual model representations 157 are generated, the BICPVRDP system 140 may further use the visual model representations 157 to generate and provide visual data about the building to one or more end users (not shown) of building information viewer user client devices 175, such as in GUIs of the BICPVRDP system displayed on those devices 175, and optionally using user data 328 specific to those end users (*e.g.,* preference data, such as for use in personalizing information and/or functionality provided to the user, including presentation of generated exterior building views using generated 3D building visual representations 157).

In at least some cases, the automated determinations by the BICPVRDP system 140 (and by the IDCA system and/or the MIGM system if the BICPVRDP system uses their functionality for data capture and mapping information generation, respectively) are performed concurrently with the data capture (*e.g.,* in a real-time or near-real-time manner, such as within milliseconds, seconds, minutes, etc. of the data capture), including to generate partial building visual model representations (*e.g.,* to incrementally expand a partial 3DGS model with some 3D point cloud Gaussian splat points for part of a building exterior with additional 3D Gaussian splat points as they are acquired) and/or partial building floor plans (*e.g.,* to incrementally expand a floor plan with the room shape for each room in which the images and additional data are captured), and to optionally use such partial building visual model representations and/or partial building floor plans and/or other acquired and generated data to provide feedback to one or more operator users of the drone and/or camera device(s), including in some cases to display corresponding information in a capture GUI shown on an operator user computing device 185. The BICPVRDP system 140 may optionally further use supporting information supplied by BICPVRDP system operator users via computing devices 105 over intervening computer network(s) 100 in some cases.

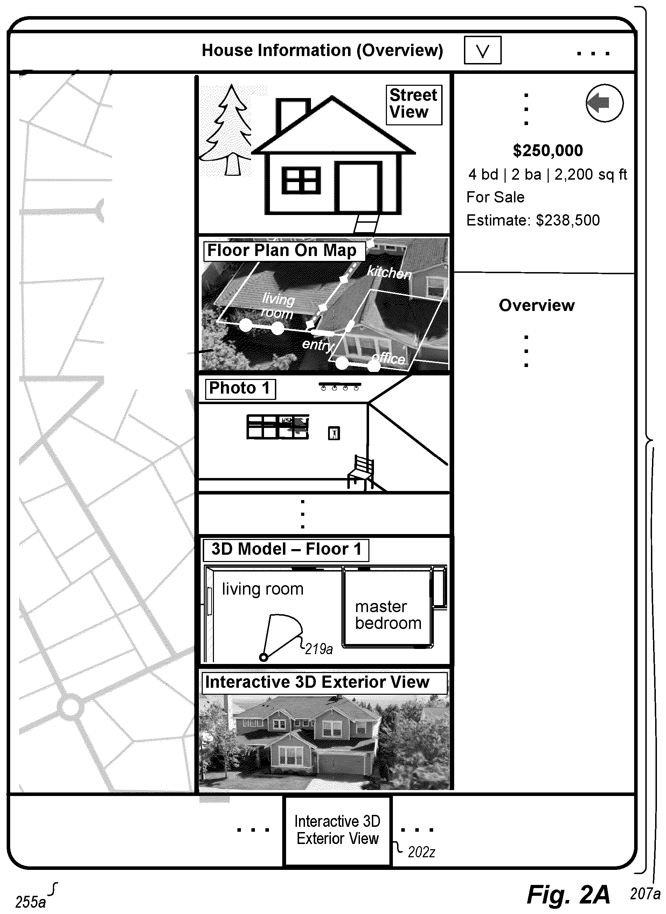

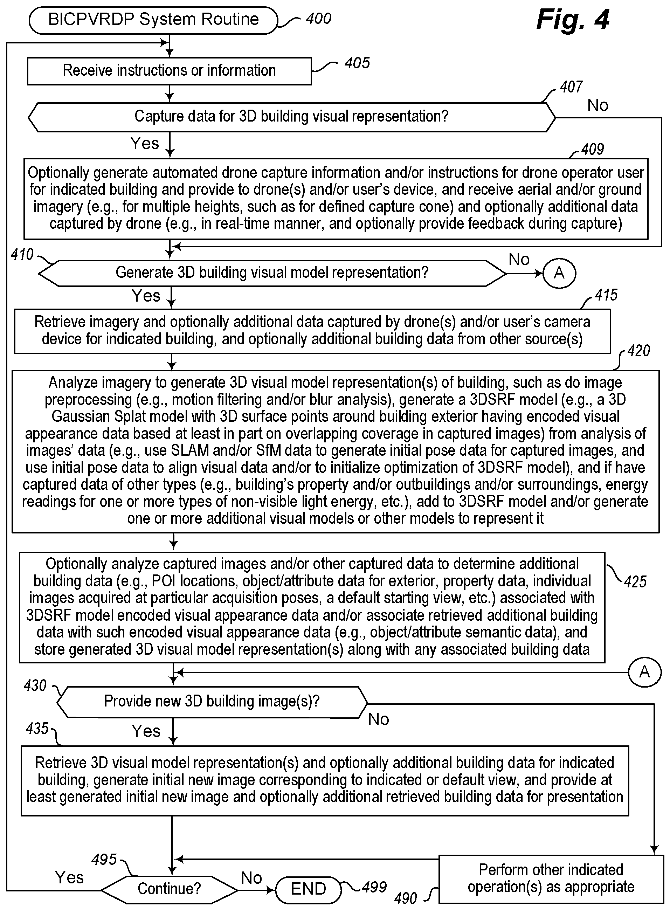

The IDCA system 150 and/or MIGM system 160 may in some cases execute on the same server computing system(s) 300 as the BICPVRDP system (*e.g.,* with all systems being operated by a single entity or otherwise being executed in coordination with each other, such as with some or all functionality of all the systems integrated together), and in some cases the IDCA system 150 and/or MIGM system 160 may operate on one or more other systems separate from the system(s) 300, whether instead of or in addition to the copies of those systems executing on the system(s) 300 (*e.g.,* to have a copy of the MIGM system 160 executing on the device 179 and/or 185 to incrementally generate at least some building mapping data as building images are acquired, while another copy of the MIGM system optionally executes on one or more server computing systems to generate a final complete building floor plan after all images are acquired; etc.). In the illustrated example, client applications 154 for the BICPVRDP system and optionally for one or more of the IDCA system and/or the MIGM system may execute on the devices 179 and/or 185 and/or 184, and a BICPVRDP client application or other building information viewer system (not shown) may execute on one or more user client devices 175 to receive and present generated building data. In addition, building information may in some cases be obtained by the BICPVRDP system in manners other than via IDCA and/or MIGM systems (*e.g.,* if such IDCA and/or MIGM systems are not part of the BICPVRDP system), such as to receive building images and/or other data from other sources, and/or to generate or otherwise obtain mapping information without using the MIGM system. Additional details related to the automated operations of the BICPVRDP system are included elsewhere herein, including with respect to Figures 2A-2L and Figure 4. Additional details related to automated operation of the IDCA and MIGM systems are included elsewhere herein, including with respect to Figures 5 and 6A-6B, respectively.

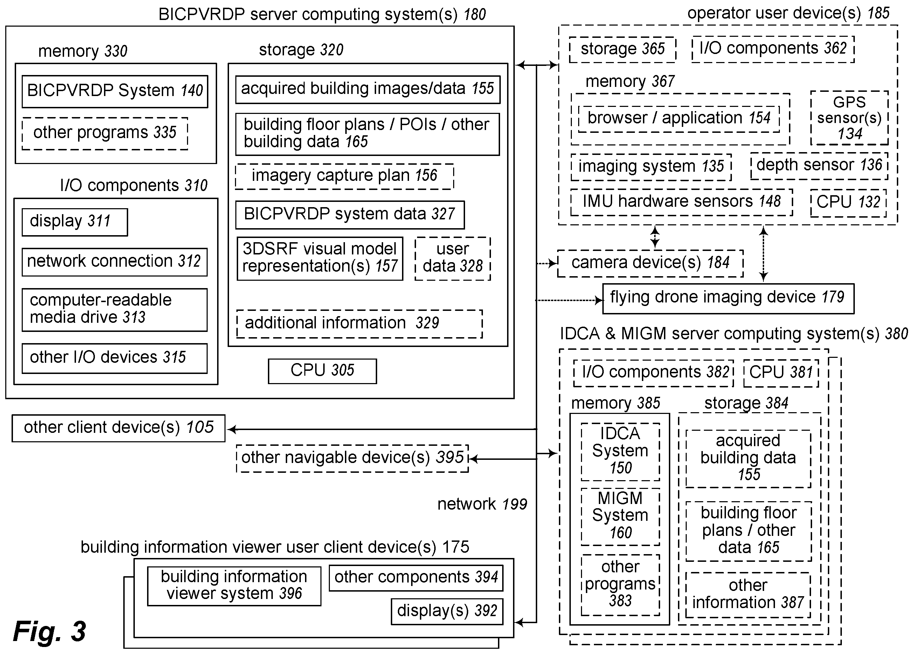

Various components of the devices 179 and 185 are also illustrated in Figure 1A, including one or more respective hardware processors 132a and 132b (*e.g.,* CPUs, GPUs, etc.) that execute software (*e.g.,* respective applications 154a and 154b, optional browser or other software program(s), etc.) using executable instructions stored and/or loaded on one or more respective memory/storage components 152a and 152b of the devices 179 and 185, as well as respective I/O (input/output) and communication components 151a and 151b. The device 179 may further include one or more imaging systems 135a of one or more types (*e.g.,* including one or more cameras with one or more lenses and one or more image sensors) to acquire visual data of images (such as rectilinear perspective images), and the camera device 184 may similarly include one or more imaging systems 135b (not shown). A device 185 may also in some cases receive some or all images 155a and/or 155b and/or 155c from one or more separate associated drone devices 179 and/or camera devices 184 (*e.g.,* via a temporary wired/cabled connection, via Bluetooth or other inter-device wireless communications, etc.) and provide storage and/or transmission functionality for those images. The illustrated example of mobile device 179 further includes one or more sensor modules 148 that include a gyroscope 148a, accelerometer 148b and compass 148c in this example (*e.g.,* as part of one or more IMUs, or inertial measurement units, on the device, not shown separately), one or more control systems 147 managing I/O (input/output) and/or communications and/or networking for the device 179 (*e.g.,* to receive instructions 156a) such as for other device I/O and communication components 151a (*e.g.,* network interfaces or other connections, keyboards, mice or other pointing devices, microphones, speakers, GPS receivers, etc.), a GPS (or Global Positioning System) receiver/sensor 134 or other position determination sensor (not shown in this example), optionally one or more depth-sensing sensors or other distance-measuring components 136 of one or more types, optionally other components (*e.g.,* one or more lighting components), etc. - the camera device 184 and/or device 185 may similarly include some or all such components. In this example, the device 185 further includes a display system 149 (*e.g.,* including one or more displays, optionally with touch-sensitive screens), and the other camera device 184 and/or drone device 179 may similarly include such components. Other devices/systems 105, 175 and 300 may each include various hardware components and stored information in a manner analogous to devices 179 and 185, which are not shown in this example for the sake of brevity, and as discussed in greater detail below with respect to Figure 3.

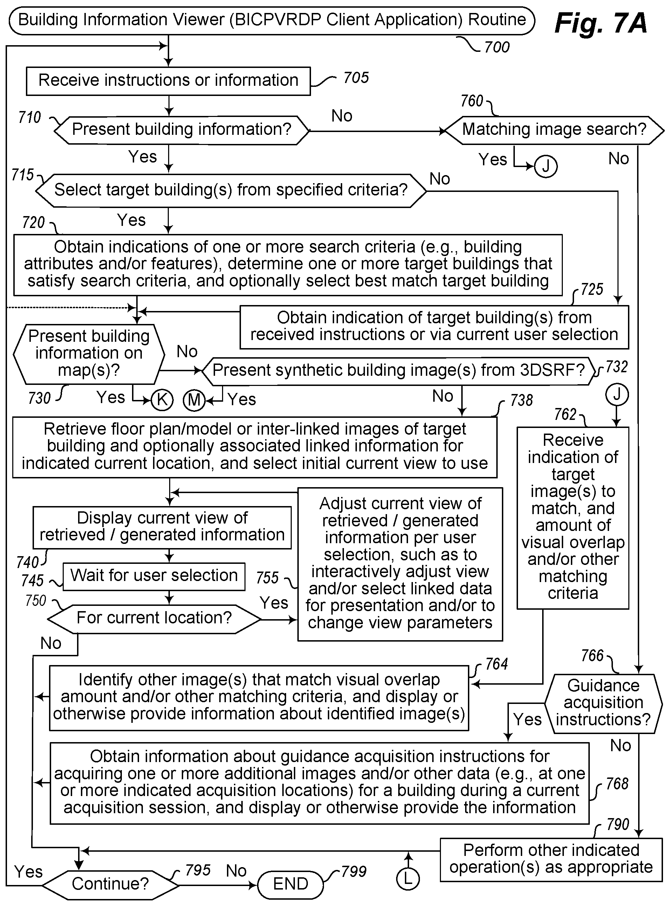

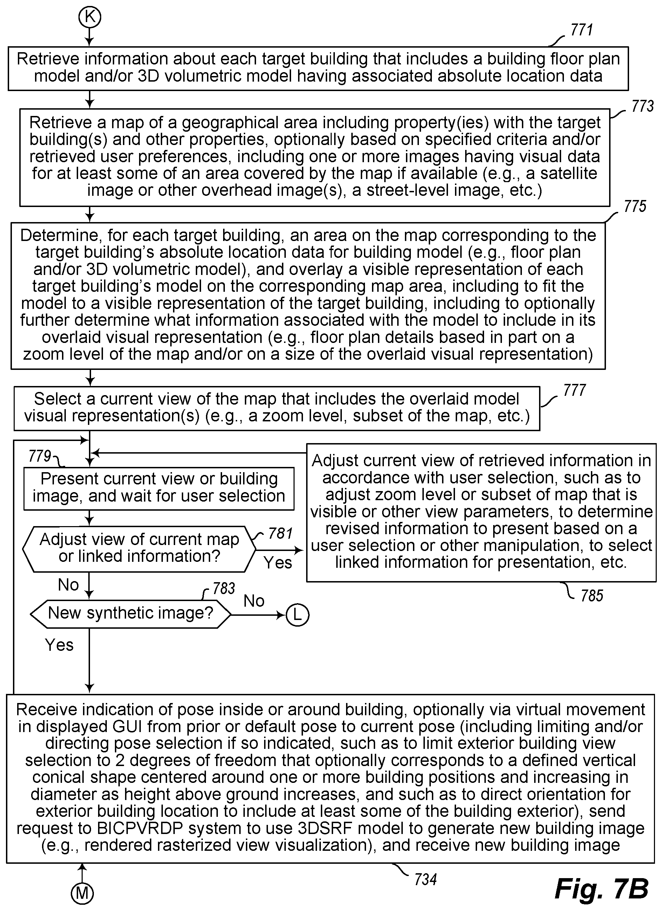

One or more users (*e.g.,* end-users, not shown) of one or more mobile client devices 175 may further interact over one or more computer networks 100 with the BICPVRDP system 140 (and optionally the IDCA system 150 and/or MIGM system 160), and/or with a client application of the BICPVRDP system executing on that device 175 (not shown), such as to participate in acquiring and presenting or otherwise displaying received building data, etc. Such mobile devices 175 may each execute a BICPVRDP client application or other building information viewer system (not shown) that is used to interact with the BICPVRDP system to request and receive building information, to present such received building information and/or other received information on that mobile device (*e.g.,* as part of a GUI displayed on that mobile device), and further optionally receive and respond to interactions by one or more users with the presented information (*e.g.,* with displayed user-manipulatable controls, such as part of the generated visual data enhancements), as discussed in greater detail elsewhere herein, including with respect to Figures 2A-2L and 7A-7B. Interactions by the user(s) may include, for example, displaying rasterized exterior building view renderings generated from exterior building visual representations, displaying maps with one or more 2D or 3D building floor plan models overlaid at positions corresponding to their associated absolute locations, specifying criteria to use in providing building information (*e.g.,* criteria about building attributes of interest to a user), obtaining and optionally requesting other types of information for one or more indicated buildings (*e.g.,* at which the user's mobile device is located, such as by supplying one or more additional images acquired at a building) and interacting with corresponding provided building information - non-exclusive examples of interactions with displayed or otherwise presented information includes the following: to view building information, such as part of provided descriptive building data; to select user-manipulatable controls that are included with provided building data, such as included in visual data enhancements overlaid on a target image, including to interact with one or more displayed visual indicators and/or textual descriptions associated with a particular building object or other building attribute, such as to obtain further data related to that building object or other building attribute; to change between a rasterized exterior building view rendering and/or a floor plan view and/or a view of a particular image at an acquisition location at the building; to change the horizontal and/or vertical viewing direction from which a corresponding view is displayed, such as to modify a view location of an exterior building view and/or to determine a portion of a panorama image to which a current user viewing direction is directed; to zoom and/or otherwise manipulate a displayed building exterior view and/or map and/or a building floor plan model overlaid on the map; etc.). In addition, an exterior building view and/or floor plan (or portion of it) may be linked to or otherwise associated with one or more other types of information, including for a floor plan of a multi-story or otherwise multi-level building to have multiple associated sub-floor plans for different stories or levels that are interlinked (*e.g.,* via connecting stairway passages), for a two-dimensional ("2D") floor plan of a building to be linked to or otherwise associated with a three-dimensional ("3D") rendering of the building, etc. Also, while not illustrated in Figure 1A, in some cases the client devices 175 (or other devices, not shown) may receive and use information about buildings (*e.g.,* identified floor plans and/or other mapping-related information) in additional manners, such as to control or assist automated navigation activities by those devices (*e.g.,* by autonomous vehicles or other devices), whether instead of or in addition to display of the identified information.

In the depicted computing environment of Figure 1A, the network 100 may be one or more publicly accessible linked networks, possibly operated by various distinct parties, such as the Internet. In other implementations, the network 100 may have other forms. For example, the network 100 may instead be a private network, such as a corporate or university network that is wholly or partially inaccessible to non-privileged users. In still other implementations, the network 100 may include both private and public networks, with one or more of the private networks having access to and/or from one or more of the public networks. Furthermore, the network 100 may include various types of wired and/or wireless networks in various situations. In addition, the client devices 175 and server computing systems 300 may include various hardware components and stored information, as discussed in greater detail below with respect to Figure 3.

As noted above, the IDCA system may perform automated operations involved in generating multiple 360° panorama images at multiple associated image acquisition locations (*e.g.,* in multiple rooms or other locations within a building or other structure and optionally around some or all of the exterior of the building or other structure), such as using visual data acquired via one or more camera devices 184, and for use in generating and providing a representation of an interior of the building or other structure. For example, in at least some such cases, such techniques may include using one or more such camera devices (*e.g*., a camera having one or more fisheye lenses and/or other lenses and mounted on a rotatable tripod or otherwise having an automated rotation mechanism; a camera having sufficient fisheye lenses and/or other lenses to acquire 360° horizontally without rotation; a camera of a smartphone or separate device held by or mounted on a user or the user's clothing and using one or more non-fisheye lenses, such as wide-angle rectilinear lenses and/or telephoto lenses and/or macro lenses and/or standard lenses; etc.) to acquire data from a sequence of multiple acquisition locations within multiple rooms of a house (or other building), and to optionally further acquire data involved in movement of the capture device (*e.g.,* movement at an acquisition location, such as rotation; movement between some or all of the acquisition locations, such as for use in linking the multiple acquisition locations together; etc.), in at least some cases without having distances between the acquisition locations being measured or having other measured depth information to objects in an environment around the acquisition locations (*e.g.,* without using any depth-sensing sensors). After an acquisition location's information is acquired, the techniques may include producing a 360° panorama image from that acquisition location with 360° of horizontal information around a vertical axis (*e.g.,* a 360° panorama image that shows the surrounding room in an equirectangular format), and providing the panorama images for subsequent use by the MIGM and/or BICPVRDP systems.

In addition, a floor plan (or portion of it) may be linked to or otherwise associated with one or more additional types of information, such as one or more associated and linked images or other associated and linked information, including for a two-dimensional ("2D") floor plan of a building to be linked to or otherwise associated with a separate 2.5D model floor plan rendering of the building and/or a 3D model floor plan rendering of the building, etc., and including for a floor plan of a multi-story or otherwise multi-level building to have multiple associated sub-floor plans for different stories or levels that are interlinked (*e.g.,* via connecting stairway passages) or are part of a common 2.5D and/or 3D model. Accordingly, non-exclusive examples of an end-user's interactions with a displayed or otherwise generated 2D floor plan of a building may include one or more of the following: to change between a floor plan view and a view of a particular image at an acquisition location within or near the floor plan; to change between a 2D floor plan view and a 2.5D or 3D model view that optionally includes images texture-mapped to walls of the displayed model; to change the horizontal and/or vertical viewing direction from which a corresponding subset view of (or portal into) a panorama image is displayed, such as to determine a portion of a panorama image in a 3D coordinate system to which a current user viewing direction is directed, and to render a corresponding planar image illustrating that panorama image portion without the curvature or other distortions present in the original panorama image; etc.

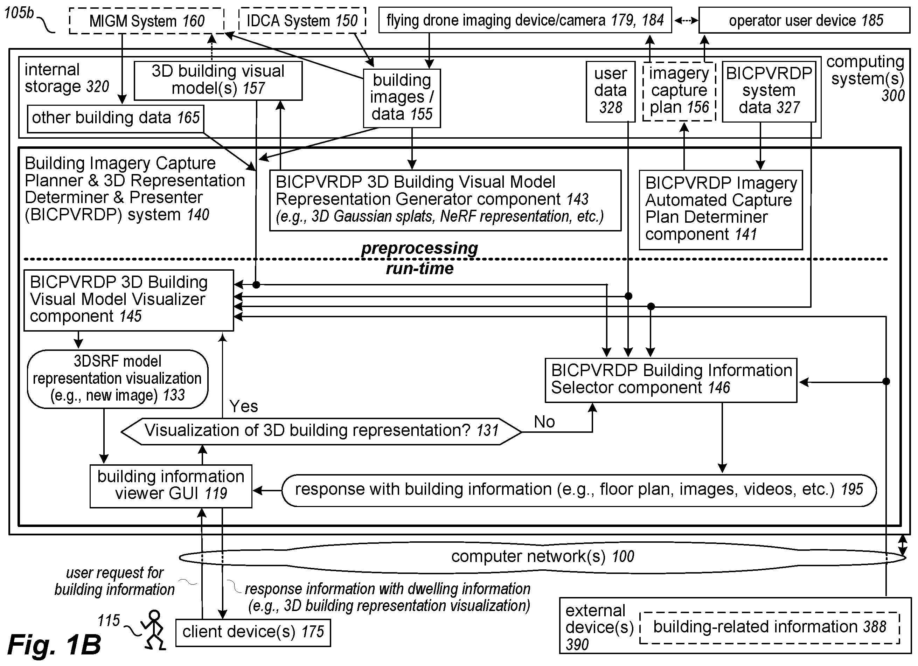

Figure 1B provides further details 105b regarding an example of the BICPVRDP system 140. In this example, the system 140 receives building images/data 155 of an exterior of a building from one or more flying drone imaging devices 179 and/or ground-based camera devices 184 (and optionally additional interior images/data from an IDCA system 150), such as in response to a BICPVRDP Imagery Automated Capture Plan Determiner component 141 generating and providing an optional imagery capture plan 156 to the drone(s) 179 and/or the camera device(s) 184 and/or to an associated operator user device 185. As part of preprocessing activities, a BICPVRDP 3D Building Visual Model Representation Generator component 143 analyzes the building images and optionally other data and generates one or more resulting 3D building visual representations 157, such as a 3D point cloud of 3D Gaussian splats. An optional MIGM system 160 may further analyze the building images/data 155 and/or the 3D building visual model representations 157 in order to generate other building data 165, such as a building floor plan, POls, etc. Additional details related to generating and using 3D Gaussian splats is included in "3D Gaussian Splatting For Real-Time Radiance Field Rendering" by Kerbl et al. ACM Trans. Graph., Vol. 42, No. 4, August 2023.

After the 3D building visual representations 157 and optionally other building data 165 is generated, the system 140 may further use that generated information during run-time operations to prepare and present associated building information to various end users 115 of client devices 175. In particular, a particular end-user 115 may supply a request to a GUI 119 of the system 140 for information about a particular building, and if so the system 140 may determine 131 if the request is for a visualization of the building exterior. If so, the BICPVRDP 3D Building Visual Model Visualizer component 145 takes the generated 3D building visual representation(s) 157 as input, optionally along with other building data 165 and/or building images/data 155 and/or other building-related information 388 from one or more external devices 390 (*e.g.,* for use in providing overlaid information on the building exterior view that is provided or otherwise providing additional building data), with user data 328 (*e.g.,* for the end user 115 for use in personalizing the provided data), and with BICPVRDP system data 327 (*e.g.,* defaults or other specifications for information to be provided, such as formats and sizes of data to be presented; information about GUI controls to provide; etc.), and generates at least one resulting new image rendering 133 as a visualization of the building exterior from a particular view pose, which is provided to the client device 175 in response to the request via the GUI 119 for display on the device 175. A subsequent request from the end user may, for example, be for a modification to an exterior view 133 previously provided by the system 140 and displayed on a client device 175 (*e.g.,* a change to a new pose via one or more virtual movements), and if so the component 145 may similarly generate and provide an updated exterior view 133 for display on the client device 175 (*e.g.,* in a real-time or near real time manner with respect to the end user modifications to the previous view and/or other end user request). If a request from the end-user is instead for one or more other types of building data (*e.g.,* in response to a user selection or other interaction made with regard to a previously provided exterior view 133), the BICPVRDP Building Information Selector component 146 may further select and provide one or more other types of building information 195 to the end user's client device 175 via the GUI 119, such as by selecting from the building images/data 155 and/or other building data 165 and/or optionally additional building-related information 388 (*e.g.,* from one or more external public sources of building data), etc., and again optionally using user data 328 for the end-user and/or system data 327 for the system 140.

While the example discussed with respect to Figure 1B involves a series of interactions with a single user 115, it will be appreciated that the system 140 may maintain a large number of simultaneous interactions with different end users providing different types of requested information and functionality. Various details are provided with respect to Figures 1A-1B, but it will be appreciated that the provided details are non-exclusive examples included for illustrative purposes, and other cases may be performed in other manners without some or all such details.

Figures 2A-2L illustrate examples of automated operations for generating and presenting visual representations of buildings based at least in part on captured external imagery of the buildings.

In particular, Figure 2A illustrates information 255a that includes an example of a GUI 207a that may be displayed to an end user on a client device 175, such as a first group of information being provided to the end-user with respect to a particular example building. In this example, the GUI may include various user-selectable or otherwise manipulatable controls 202, with an example control 202z illustrated via which the end-user may select to switch to an interactive 3D exterior view of the building. In this example of the GUI, the displayed information includes a background map of a surrounding area, several central panes with different types of information about the current building *(*e.g., photos or other images of the building interior, an exterior street view image of the building, an overhead image of the building exterior with a portion of a floor plan for the building overlaid on the image, a 3D model of part of the building including a visual indicator 219a showing a field of view for a captured image, and an interactive 3D exterior view of the building). A right portion of the GUI includes additional textual details about the building, such as an overview narrative textual description, facts about particular selected building attributes (*e.g.,* numbers of bedrooms and bathrooms, number of square feet, current requested acquisition price and associated estimated building value, the status of whether the building is available for acquisition, etc.).

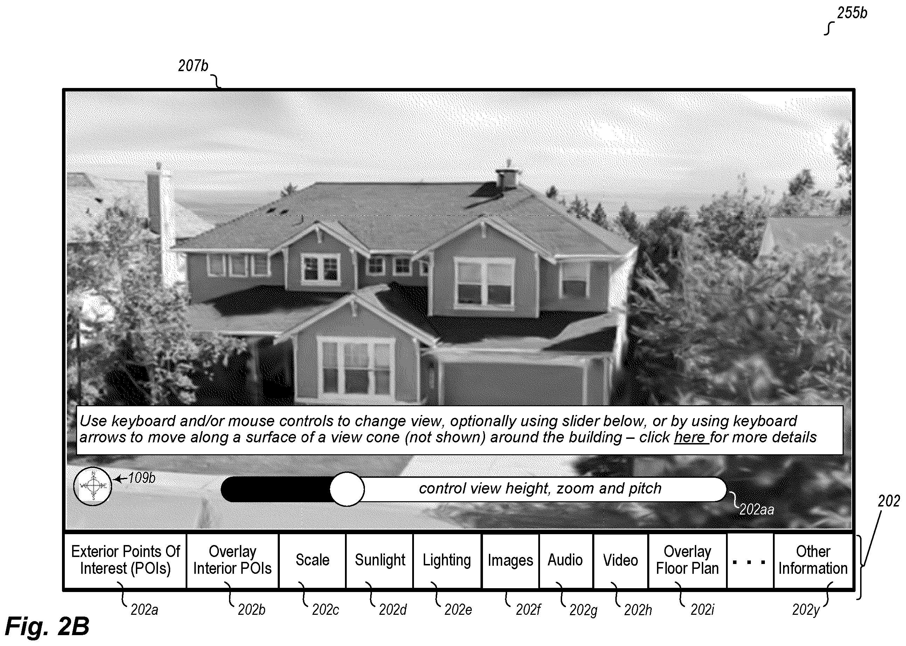

Figure 2B continues the example of Figure 2A, and illustrates information 255b showing an example of a portion 207b of the GUI that may be displayed to an end user to provide an interactive 3D exterior view of the building, such as after selection of the control 202z of Figure 2A, or instead as an initial view of information about a building selected by the end user or otherwise determined for the end user, etc. In this example, the portion 207b of the GUI that is displayed includes a single large pane with an exterior view of a front of a building (in this example a house, such as building 198 of Figure 1A), along with several user-selectable or otherwise manipulatable controls 202, overview instructions for use of the GUI, and a geographical directional indicator 109b. In this example, as indicated by the instructions, a user may use the keyboard and/or mouse controls and/or other device input controls (*e.g.,* a touch sensitive screen) to change the current view, such as to move in one or more directions (*e.g.,* along the surface of a view cone, not shown), although such instructions may not be visibly displayed and/or may be shown in other manners in other cases. In addition, the user may use the slider control 202aa in this example to simultaneously control the height, zoom level and pitch of view of the building exterior, such as to view the front of the building from different heights and zoom levels while maintaining a changing pitch to keep the building centered in the view - as discussed in greater detail elsewhere herein, the virtual movements may be limited or restricted in other manners in other situations, such as to provide 2 DOF with respect to movement along the surface of a view cone (not shown). Other of the controls 202 may enable a user to select to view additional types of information, such as exterior POIs, interior POIs, size/scale information, to change sunlight and/or man-made lighting conditions (*e.g.,* to see views corresponding to different times of day and/or days of the year, such as for different seasons), to view particular images (*e.g.,* a photo gallery, a higher resolution image from the current view, etc.), to hear audio (*e.g.,* narrated descriptions of the building, recorded ambient sounds at the building, etc.), to view video for the building, to overlay some or all of the building floor plan on the current exterior building view, etc.

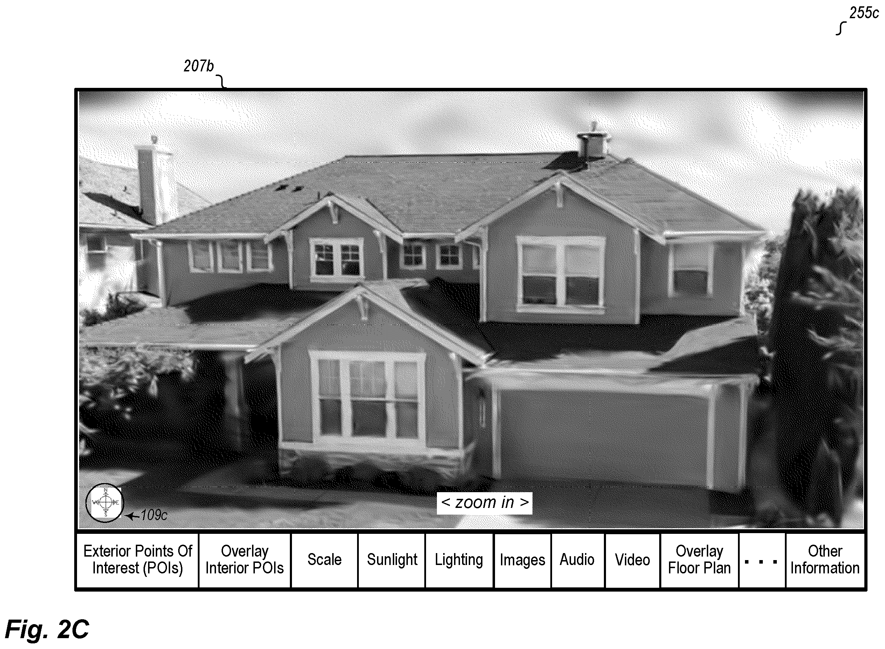

Figure 2C continues the examples of Figures 2A-2B and illustrates information 255c showing an example of a portion 207b of the GUI that corresponds to the user manipulating the exterior building view of Figure 2B to zoom in on the building (as indicated by the "< zoom in >" indication for the benefit of the reader, which may not be displayed to the end user during actual operation), such as for a ground-level view and with the resulting exterior building view showing the building filling almost all of the single illustrated pane, and with the geographical directional indicator 109c continuing to indicate the same geographical position since the direction of the view has not changed.

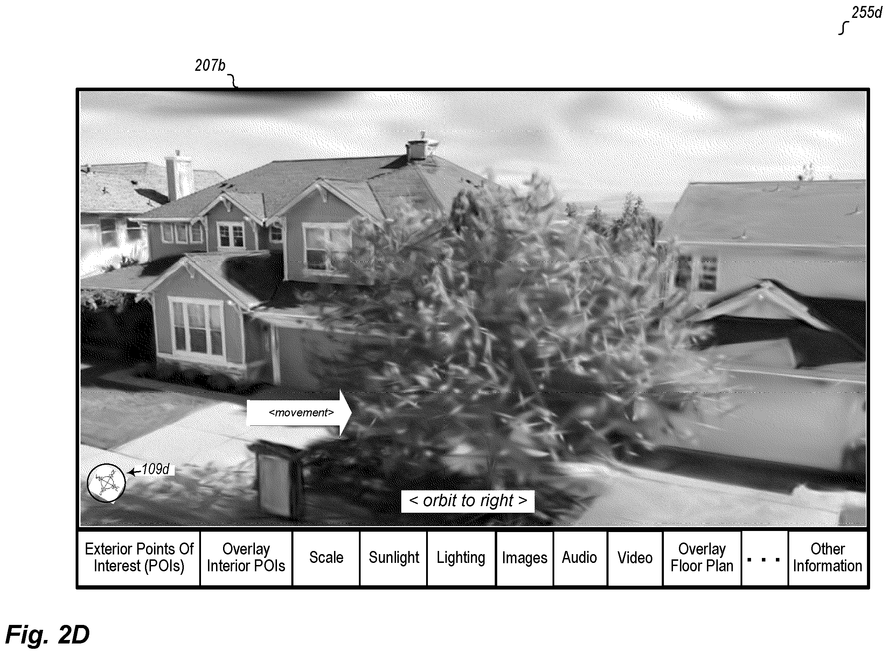

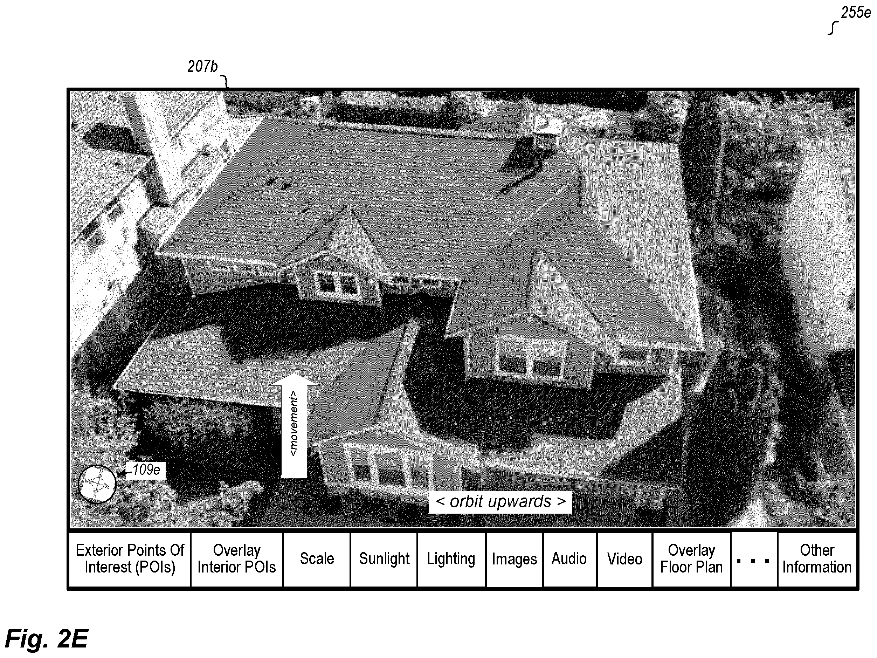

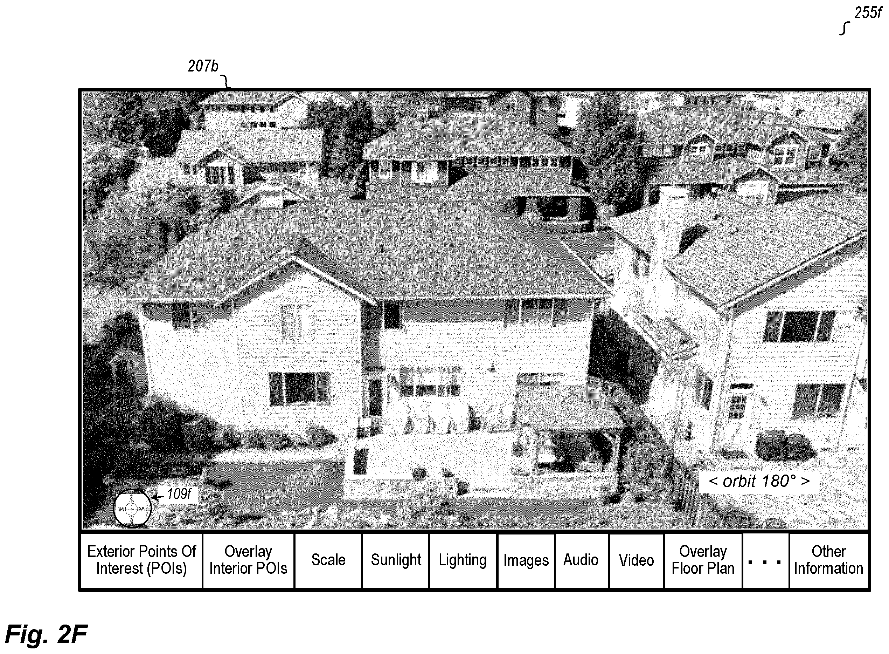

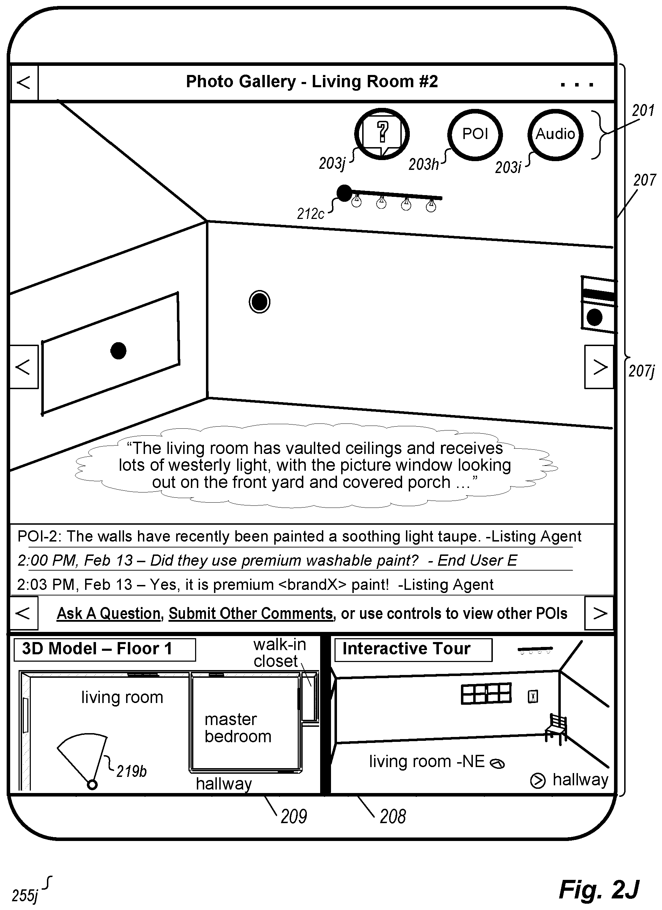

Figures 2D-2F illustrate additional examples of modifying the view of the building shown in Figure 2B, with Figure 2D illustrating information 255d showing a modified exterior building view in which the user has indicated to pan or orbit to the right (with the geographical directional indicator 109d updated accordingly, and a corresponding "<orbit to right>" visual indicator for the benefit of the reader), such as corresponding to movement along the surface of a view cone (not shown), with Figure 2E illustrating information 255e showing a modified exterior building view in which the user has indicated to pan or orbit upwards and slightly to the right (with the geographical directional indicator 109e updated accordingly, and a corresponding "<orbit upwards>" visual indicator for the benefit of the reader), such as corresponding to movement along the surface of a view cone (not shown), and with Figure 2F illustrating information 255f showing a modified exterior building view on which the user has indicated to orbit approximately 180° around the building so that a back of the building is now visible (with the geographical directional indicator 109f updated accordingly, and a corresponding "<orbit 180°>" visual indicator for the benefit of the reader), such as corresponding to movement along the surface of a view cone (not shown). While not illustrated here, in some cases the virtual movement controls may enable user input to move a current pose inside the building, and if so corresponding visual data for the building interior may be shown, as discussed in greater detail elsewhere herein, including with respect to Figures 2J-2L.

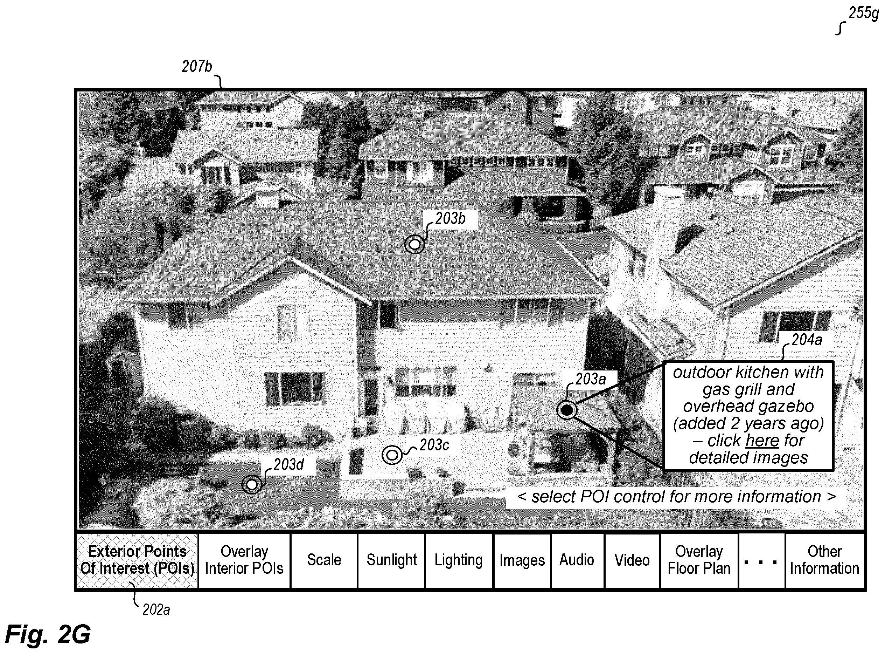

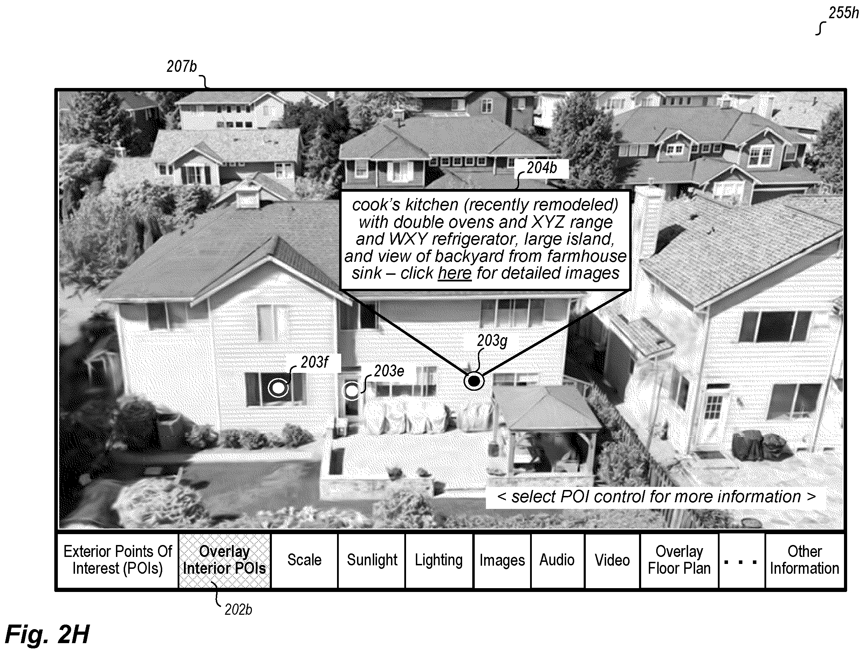

Figure 2G continues the examples of Figures 2A-2F, and illustrates information 255g showing a change to the view of Figure 2F in response to the user selection of control 202a to display information about exterior POIs. In this example, four exterior POI visual indicators 203 are illustrated, including indicator 203a corresponding to an outdoor kitchen area, indicator 203b corresponding to the roof, indicator 203c corresponding to a patio, and indicator 203d corresponding to the lawn. In this example, the user has further selected (e.g., clicked on or moused over) visual indicator 203a, with an additional explanatory textual description 204a about the corresponding POI being shown, such as may have been determined from analysis of images and/or other building data (*e.g.,* to determine a type of the object and optionally its condition; to identify changes in the object over time, such as to determine when it was added or modified; to use external property records or other sources of data to determine information about the object and/or corresponding changes; etc.). Figure 2H continues the examples of Figures 2A-2G, and illustrates information 255h showing a change to the view of Figure 2G in which the control 202a for the exterior POls is no longer selected but in which the control 202b for interior POls is selected, with three additional internal POI visual indicators 203e-g being shown for portions of the building interior that are visible to or adjacent to the back exterior of the building, and with one of the visual indicators 203g being selected and displaying additional explanatory textual data 204b about a kitchen of the building that is immediately inside the indicated position at the back of the building. As discussed in greater detail elsewhere herein, other types of information may be overlaid and displayed in a similar manner in other cases, including other types of non-visible light information captured for the building.

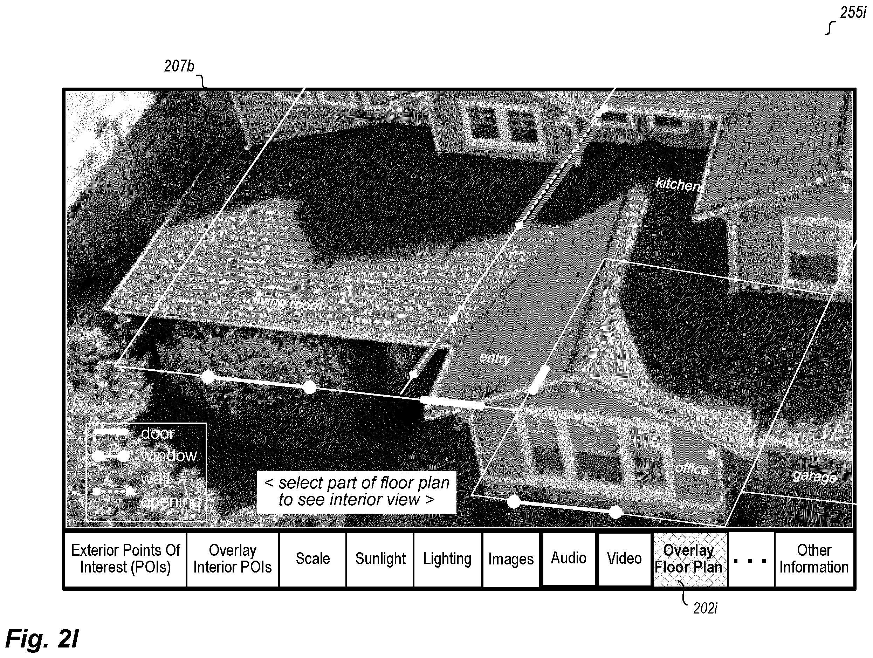

Figure 2I continues the examples of Figures 2A-2H, and illustrates information 255i showing an exterior building view of a portion of the front of the building from an overhead location, and in which a control 202i has been selected to cause a portion of a floor plan of the building to be overlaid on the image. In this example, lines and other visual indications are overlaid on the exterior building view to correspond to internal and external walls of portions of the building that are visible, including a garage to the right, adjacent to an office to the left that is accessible via a doorway from the entry to the building, a large living room accessible on the other side of the entry via a non-doorway wall opening, and a kitchen available past the entry and office to the right that is similarly accessible to the living room via a large non-doorway wall opening. A legend is further illustrated to correspond to types of overlaid information, and instructions are provided to indicate that the floor plan is selectable to see corresponding portions of the building interior (*e.g.,* to select a portion of the overlaid floor plan corresponding to the kitchen to see additional building data about the kitchen, such as images, videos, etc.). While not illustrated here, it will be appreciated that a 3D mesh or other 3D volumetric model may similarly be overlaid on such an image in other cases.

Figure 2J continues the examples of Figures 2A-2I, and illustrates information 255j showing an additional example GUI 207j to show several types of information about an interior of the building. In this example, a primary pane 207 show an image of a living room of the building, with user-selectable visual indicator controls 203h, 203i and 203j selected to show POI information, an audio narration, and prior question-answer details, respectively, and various user-selectable POI location controls (*e.g.,* control 212c associated with track lighting, a control on the main wall that is selected to display and/or audibly output descriptive information as shown, and various other illustrated controls). Further user-selectable controls are available to scroll through other images, and two additional smaller panes 208 and 209 are shown with other types of building information that are coordinated with the information display in the main pane 207, such as for pane 209 to show a portion of a 3D computer model of the building that corresponds to the current image displayed in pane 207, and for pane 208 to show part of an interactive virtual tour of the building corresponding to the current image displayed in pane 207. While not illustrated here, an additional user-selectable control may be provided that allows the end user to select which floor of the building is shown. In this example, the 3D computer model includes illustrations of the positions of the viewing/capture locations for the current image of pane 207, with the visual indicator 219b being added to correspond to the current viewing location and direction. In addition, the types of information shown in the different panes may be modified in various manners (*e.g.,* to select the information of panes 208 or 209 to cause it to be enlarged in pane 207, with the information in the selected pane 208 or 209 changed to the photo(s) previously in pane 207 and/or to a different type of information). The interactive virtual tour information shown in pane 208 includes two user-selectable links via which corresponding other images may be displayed upon selection of the respective link (and with that other displayed image similarly having one or more selectable links to one or more images).

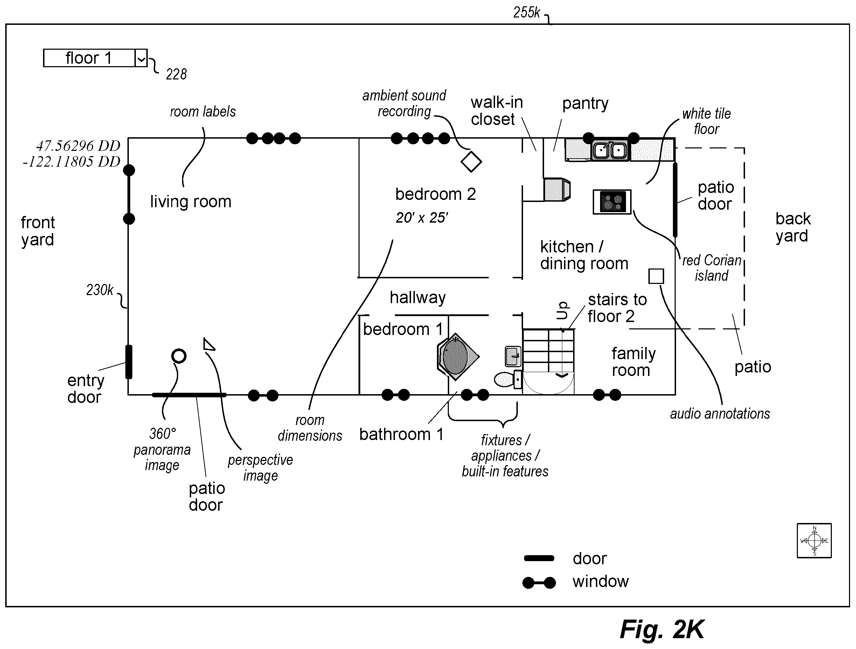

Figures 2K through 2L continue the examples of Figures 2A-2J, and illustrate examples of additional building mapping information that may be generated from the types of operations performed by the MIGM system and displayed as part of the GUI. In particular, Figure 2K illustrates information 255k showing a floor plan 230k that includes additional information of various types, such as may be automatically identified from analysis operations of visual data from images and/or from depth data, including one or more of the following types of information: room labels (*e.g.,* "living room" for the living room), room dimensions, visual indications of fixtures or appliances or other built-in features, visual indications of positions of additional types of associated and linked information (*e.g.,* of panorama images and/or perspective images acquired at specified acquisition positions, which an end user may select for further display; of audio annotations and/or sound recordings that an end user may select for further presentation; etc.), visual indications of doorways and windows, etc. - in other cases, some or all such types of information may instead be provided by one or more MIGM system operator users and/or IDCA system operator users and/or BICPVRDP system operator users. In addition, when the floor plan 230k is displayed to an end user in the GUI, one or more user-selectable controls may be added to provide interactive functionality, such as to indicate a current floor that is displayed, to allow the end user to select a different floor to be displayed, etc., with a corresponding example user-selectable control 228 added to the GUI in this example - in addition, in some cases, a change in floors or other levels may also be made directly from the displayed floor plan, such as via selection of a corresponding connecting passage (*e.g.,* a stairway to a different floor), and other visual changes may be made directly from the displayed floor plan by selecting corresponding displayed user-selectable controls (*e.g.,* to select a control corresponding to a particular image at a particular location, and to receive a display of that image, whether instead of or in addition to the previous display of the floor plan from which the image is selected). In other cases, information for some or all different floors may be displayed simultaneously, such as by displaying separate sub-floor plans for separate floors, or instead by integrating the room connection information for all rooms and floors into a single floor plan that is shown together at once. It will be appreciated that various other types of information may be added in some cases, some of the illustrated types of information may not be provided in some cases, and visual indications of and user selections of linked and associated information may be displayed and selected in other manners in other cases.

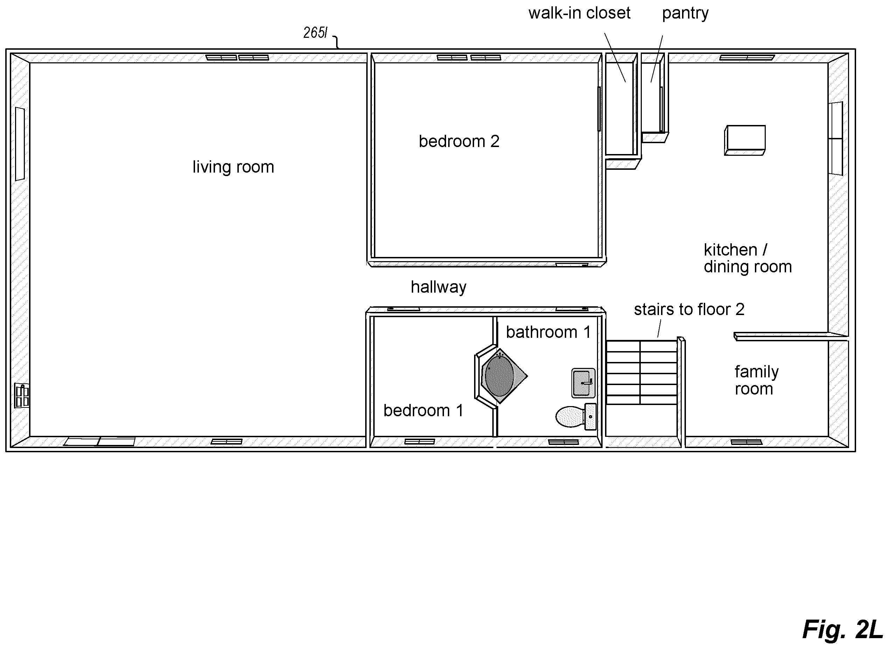

Figure 2L continues the examples of Figures 2A-2K, and illustrates additional information 265I that may be generated from the automated analysis techniques disclosed herein and displayed in a GUI, which in this example is a 2.5D or 3D model floor plan of the building. Such a model 265I may be additional mapping-related information that is generated based on the floor plan 230k, with additional information about height shown in order to illustrate visual locations in walls of features such as windows and doors - while not illustrated in Figure 2L, some or all of the additional types of information shown in Figure 2K for a 2D floor plan model may be similarly shown in a 3D floor plan model such as is shown in Figure 2L. While also not illustrated in Figure 2L, additional information may be added to the displayed walls in some cases, such as from images taken during the video capture (*e.g.,* to 'texture map' walls by rendering and illustrating actual paint, wallpaper or other surfaces from the building on the rendered model 265I), and/or may otherwise be used to add specified colors, textures or other visual information to walls and/or other surfaces.

Various details have been provided with respect to Figures 2A-2L, but it will be appreciated that the provided details are non-exclusive examples included for illustrative purposes, and other cases may be performed in other manners without some or all such details.

Figure 3 is a block diagram illustrating an example of one or more computing systems 300 executing an implementation of a BICPVRDP system 140 (*e.g.,* in a manner analogous to that of Figures 1A-1B), and one or more server computing systems 380 executing an implementation of an IDCA system 150 and an MIGM system 160 - the computing system(s) 300 and BICPVRDP system, and/or computing system(s) 380 and/or IDCA and MIGM systems, may be implemented using a plurality of hardware components that form electronic circuits suitable for and configured to, when in combined operation, perform at least some of the techniques described herein. Operator user devices 185 may each be executing one or more client applications and/or other programs 154 and optionally in communication with one or more associated drone devices 179 and/or camera devices 184, and one or more other computing systems and devices may optionally be executing a BICPVRDP system client application and/or other building information viewer system 396 (such as each device 175) and/or optional other programs 335 and 383 (such as server computing system(s) 300 and 380, respectively, in this example). In the illustrated example, each server computing system 300 includes one or more hardware central processing units ("CPUs") or other hardware processors 305, various input/output ("I/O") components 310, storage 320, and memory 330, with the illustrated I/O components including a display 311, a network connection 312, a computer-readable media drive 313, and other I/O devices 315 (*e.g.,* keyboards, mice or other pointing devices, microphones, speakers, GPS receivers, etc.). Each server computing system 380 may have similar components, although only one or more hardware processors 381, memory 385, storage 384 and I/O components 382 are illustrated in this example for the sake of brevity.

The server computing system(s) 300 and executing BICPVRDP system 140, and server computing system(s) 380 and executing IDCA and MIGM systems 150 and 160, and devices 185 and executing software 154, and devices 175 and executing software 396, and devices 105 and 179 and 184 may communicate with some or all of each other and with other computing systems and devices in this illustrated example, such as via one or more networks 100 (*e.g.,* the Internet, one or more cellular telephone networks, etc.), including to interact with optional other navigable devices 395 that receive and use floor plans and optionally other generated building information for navigation purposes (*e.g.,* for use by semi-autonomous or fully autonomous vehicles or other devices), and for a device 185 at a building to communicate with other building devices, not shown (*e.g.,* using communication and/or sensor components to receive transmissions from transmitter devices and/or to otherwise communicate with other building devices, such as electronic lockboxes or locks, smart home devices, etc.). The mobile devices 175 in this example are illustrated as including one or more displays 392 on which to present provide building information from the BICPVRDP system, and optionally other components 394 (*e.g.,* computing resources, I/O components, sensors, etc.). Some of the described functionality may be combined in less computing systems in other cases, such as to combine some or all of the BICPVRDP system 140 with a building information viewer system 396 in a single system or device (*e.g.,* a mobile device 175), to combine the BICPVRDP system 140 and the functionality of device(s) 185 in a single system or device, to combine the IDCA and MIGM systems 150 and 160 and the data capture functionality of device(s) 185 in a single system or device, to combine the BICPVRDP system 140 and one or both of the IDCA and MIGM systems 150 and 160 in a single system or device, to combine the BICPVRDP system 140 and the IDCA and MIGM systems 150 and 160 and the data capture functionality of device(s) 185 in a single system or device, etc.

In the illustrated example, the BICPVRDP system 140 executes in memory 330 of the server computing system(s) 300 in order to perform at least some of the described techniques, such as by using the processor(s) 305 to execute software instructions of the system 140 in a manner that configures the processor(s) 305 and computing system 300 to perform automated operations that implement those described techniques. The illustrated example of the BICPVRDP system may include one or more components (not shown), such as to each perform portions of the functionality of the BICPVRDP system, and the memory may further optionally execute one or more other programs 335 - as one specific example, a copy of the IDCA and/or MIGM systems may execute as one of the other programs 335 in at least some cases, such as instead of or in addition to the IDCA and/or MIGM systems 150 and 160 on the server computing system(s) 380, and/or a copy of a building information viewer system may execute as one of the other programs 335 (*e.g.,* if the computing system(s) 300 are the same as a mobile device 175). The BICPVRDP system 140 may further, during its operation, store and/or retrieve various types of data on storage 320 (*e.g.,* in one or more databases or other data structures), such as acquired images/data 155, building floor plans and other building information 165, optionally imagery capture plans or other instructions 156, internal data 327 used for operation of the system 140, generated 3D building visual representations 157, optionally user data 328, and/or various types of optional other information 329 (*e.g.,* various analytical information related to presentation or other use of building exteriors and/or interiors or other environments).

In addition, examples of the IDCA and MIGM systems 150 and 160 execute in memory 385 of the server computing system(s) 380 in order to perform techniques related to generating panorama images and floor plans for buildings, such as by using the processor(s) 381 to execute software instructions of the systems 150 and/or 160 in a manner that configures the processor(s) 381 and computing system(s) 380 to perform automated operations that implement those techniques. The illustrated example of the IDCA and MIGM systems may include one or more components, not shown, to each perform portions of the functionality of the IDCA and MIGM systems, respectively, and the memory may further optionally execute one or more other programs 383. The IDCA and/or MIGM systems 150 and 160 may further, during operation, store and/or retrieve various types of data on storage 384 (*e.g.,* in one or more databases or other data structures), such as video and/or image information 155 acquired for one or more buildings (*e.g.,* 360° video or images for analysis to generate floor plans, to provide to users of client computing devices 175 for display, etc.), floor plans and/or other generated mapping information 165, and optionally other information 387 (*e.g.,* additional images and/or annotation information for use with associated floor plans, building and room dimensions for use with associated floor plans, information related to presentation or other use of one or more building interiors or other environments, etc.), as well as optionally interact with or use information from one or more I/O components 382 - while not illustrated in Figure 3, the IDCA and/or MIGM systems may further store and use additional types of information, such as about other types of building information to be analyzed and/or provided to the BICPVRDP system, about IDCA and/or MIGM system operator users and/or end-users, etc.

Some or all of the devices 175 and/or 185 and/or 105 and/or 179 and/or 184, optional other navigable devices 395, and/or other computing systems (not shown) may similarly include some or all of the same types of components illustrated for server computing system 300. As one non-limiting example, the devices 185 are each shown to include one or more hardware CPU(s) 132, memory 367, storage 365, I/O components 362, one or more GPS receiver sensors 134, one or more imaging systems 135 (*e.g.,* for use in acquisition of video and/or images), optionally IMU hardware sensors 148 (*e.g.,* for use in acquisition of associated device movement data, etc.), optionally one or more depth sensors 136, and optionally other components (not shown). In the illustrated example, zero or one or more client applications 154 (*e.g.,* an application specific to the IDCA system and/or to the MIGM system and/or to the BICPVRDP system) and/or other programs 154 are executing in memory 367, such as to participate in communication with the BICPVRDP system 140, IDCA system 150, MIGM system 160 and/or other computing systems. While particular components are not illustrated for the other devices 105, 175, 395, 179 and 184, it will be appreciated that they may include similar and/or additional components.

It will also be appreciated that computing systems/devices 300 and 185 and 380 and 175 and 179 and 184 and the other systems and devices included within Figure 3 are merely illustrative and are not intended to limit the scope of the present invention. The systems and/or devices may instead each include multiple interacting computing systems or devices, and may be connected to other devices that are not specifically illustrated, including via Bluetooth communication or other direct communication, through one or more networks such as the Internet, via the Web, or via one or more private networks (*e.g.,* mobile communication networks, etc.). More generally, a device or other computing system may comprise any combination of hardware that may interact and perform the described types of functionality, optionally when programmed or otherwise configured with particular software instructions and/or data structures, including without limitation desktop or other computers (*e.g.,* tablets, slates, etc.), database servers, network storage devices and other network devices, smartphones and other cell phones, consumer electronics, wearable devices, digital music player devices, handheld gaming devices, PDAs, wireless phones, Internet appliances, and various other consumer products that include appropriate communication capabilities. In addition, functionality provided by the illustrated BICPVRDP system 140 may in some cases be distributed in various components, some described functionality of the BICPVRDP system 140 may not be provided, and/or other additional functionality may be provided.

It will also be appreciated that, while various items are illustrated as being stored in memory or on storage while being used, these items or portions of them may be transferred between memory and other storage devices for purposes of memory management and data integrity. Alternatively, in other cases some or all of the software components and/or systems may execute in memory on another device and communicate with the illustrated computing systems via inter-computer communication. Thus, in some cases, some or all of the described techniques may be performed by hardware means that include one or more processors and/or memory and/or storage when configured by one or more software programs (*e.g.,* by the BICPVRDP system 140 executing on server computing systems 300, by a BICPVRDP client application or other building information viewer system executing on mobile devices 175 or other computing systems/devices, etc.) and/or data structures, such as by execution of software instructions of the one or more software programs and/or by storage of such software instructions and/or data structures, and such as to perform algorithms as described in the flow charts and other disclosure herein. Furthermore, in some cases, some or all of the systems and/or components may be implemented or provided in other manners, such as by consisting of one or more means that are implemented partially or fully in firmware and/or hardware (*e.g.,* rather than as a means implemented in whole or in part by software instructions that configure a particular CPU or other processor), including, but not limited to, one or more application-specific integrated circuits (ASICs), standard integrated circuits, controllers (*e.g.,* by executing appropriate instructions, and including microcontrollers and/or embedded controllers), field-programmable gate arrays (FPGAs), complex programmable logic devices (CPLDs), etc. Some or all of the components, systems and data structures may also be stored (*e.g.,* as software instructions or structured data) on a non-transitory computer-readable storage mediums, such as a hard disk or flash drive or other non-volatile storage device, volatile or non-volatile memory (*e.g.,* RAM or flash RAM), a network storage device, or a portable media article (*e.g.,* a DVD disk, a CD disk, an optical disk, a flash memory device, etc.) to be read by an appropriate drive or via an appropriate connection. The systems, components and data structures may also in some cases be transmitted via generated data signals (*e.g.,* as part of a carrier wave or other analog or digital propagated signal) on a variety of computer-readable transmission mediums, including wireless-based and wired/cable-based mediums, and may take a variety of forms (*e.g.,* as part of a single or multiplexed analog signal, or as multiple discrete digital packets or frames). Such computer program products may also take other forms in other cases. Accordingly, examples of the present disclosure may be practiced with other computer system configurations.

Figure 4 illustrates an example flow diagram for a Building Imagery Capture Planner and 3D Visual Representation Determiner and Presenter (BICPVRDP) system routine in accordance with the present disclosure. The routine may be performed by, for example, execution of the BICPVRDP system 140 of Figures 1 and/or 3, and/or a BICPVRDP system as described with respect to Figures 2A-2L and elsewhere herein, such as to provide a computer-implemented method to perform automated operations related to automatically generating visual representations of buildings based at least in part on captured external imagery of the buildings and using the generated building visual representations to generate and present corresponding new exterior building image views from particular view poses. In the example of Figure 4, buildings may be houses or other types of buildings, and various types of information may be provided or otherwise used in particular manners, but in other cases, other types of buildings and information uses may be used, as discussed elsewhere herein.

The illustrated example of the routine begins at block 405, where instructions or information are received. The routine continues to block 407, where it determines if the instructions or other information received in block 405 indicate to initiate the capture of imagery and optionally other data for use in generating a 3D visual model representation of an indicated building, and if so continues to block 409 where it optionally generates capture information (*e.g.,* an automated flight path and associated automated data capture instructions, manual data capture instructions, etc.) for use by one or more aerial and/or ground-based drone devices and/or other data capture devices (*e.g.,* camera device carried by a user) and/or for use by an operator of the drone(s) and/or other data capture device(s), and provides the capture information to the drone device(s) and/or other data capture device(s) and/or to the operator user's device. The routine then receives imagery and optionally additional data captured by the drone device(s) and/or other data capture device(s) for at least an exterior of the indicated building from multiple heights and capture poses (*e.g.,* optionally in real-time, and if so the routine may optionally further provide feedback information based on the received information to the drone device(s) and/or other data capture device(s) and/or to an operator user of the one or more devices), in some cases waiting until the corresponding data is captured, although in other cases the routine may operate asynchronously and proceed to perform additional operations while waiting for data capture and provision.

After block 409, or if it is instead determined in block 407 that the instructions or other information received in block 405 are not to currently capture data, the routine continues to block 410 to determine if the instructions or other information received in block 405 indicate to generate one or more 3D building visual model representations for an indicated building using previously captured external imagery and optionally other data, and if so proceeds to perform blocks 415-425. In particular, in block 415, the routine retrieves imagery and optionally additional data captured by one or more drone devices and/or other data capture devices for the indicated building, such as to have just occurred in block 409 and/or to retrieve previously captured and stored data. In block 420, the routine then analyzes the imagery to generate one or more 3D visual model representations of at least the exterior of the building, including in some cases to do image preprocessing (*e.g.,* to do motion filtering and/or blur analysis, such as to filter or otherwise exclude images that have blurring above a defined threshold from object motion in the image field of view and/or from camera motion during image capture, or to otherwise modify those images to reduce the blurring), to generate a 3DSRF model (*e.g.,* a 3DGS model with Gaussian splat 3D points around at least the building exterior and optionally throughout the building interior) based at least in part on overlapping visual features in captured images and corresponding alignment using initial pose data from SLAM and/or SfM, to use the initial pose data to initialize an optimization process for the 3DSRF model (*e.g.,* for a Gaussian Splat point cloud of a 3DGS model), and to determine final pose data for the imagery based on the optimization process. In other cases, the routine may perform one or more other activities, whether in addition to or instead of generating the 3D Gaussian splat point cloud, such as to generate a neural radiance field ("NeRF") deep learning neural network or other type of 3DSRF model to represent visual data of the captured images, to optionally generate a 3D mesh of the building exterior from the 3D Gaussian splat point cloud and/or NeRF deep learning neural network and/or using photogrammetry, to optionally generate another type of 3D volumetric model of the building (*e.g.,* based at least in part on captured LiDAR data), etc. In block 425, the routine then optionally analyzes the captured images and/or other captured data to determine additional building data associated with locations in the generated 3DSRF model (*e.g.,* with particular Gaussian splat points in a 3DGS model) and/or other geographical locations at or around or within the building, such as POI locations, property data, individual images acquired at particular acquisition poses, a default starting view for use with an interactive 3D building visual representation that includes presentation of new images generated via virtual movement from user input to select or otherwise determine particular view poses, etc., including to optionally associate semantic object and/or attribute data of one or more types with particular groups of one or more 3D Gaussian splats in a 3DGS model or with other encoded visual appearance data in another type of 3DSRF model, and stores the generated 3D building visual model representation(s) along with associated building data for later use.

After block 425, or if it is instead determined in block 410 that the instructions or other information received in block 405 are not to generate one or more 3D visual model representations, the routine continues to block 430 to determine if the instructions or other information received in block 405 are to provide one or more building visualizations that include one or more generated new image renderings in rasterized format to each provide a building view from an indicated view pose (*e.g.,* exterior building views, interior building views, etc.) for display on a client device of an end user, and if so continues to block 435. In block 435, the routine retrieves one or more previously generated 3D visual model representations and optionally any associated additional building data, generates at least one new building image with a view corresponding to at least one requested or default view pose (optionally as a modification made by an end-user to a previously provided building view via user input, such as to pan and/or orbit along a view cone, to zoom, etc.), and provides at least the generated building images and optionally additional retrieved building data for presentation. In some cases, user input from an end-user may be received in part or in whole in a natural language free-form input format (*e.g.,* to indicate object and/or attribute semantic data), and the routine may parse that received input in order to determine an appropriate response.

If it is instead determined in block 430 that the instructions or other information received in block 430 are not to provide new 3D building images, the routine continues instead to block 490, where it performs one or more other indicated operations as appropriate. Such other indicated operations may include, for example, one or more of the following non-exclusive examples: receiving and storing information about operator users and/or drone devices and/or camera devices; receiving and storing (or otherwise determining) information about buildings; receiving and storing information about end users; retrieving and providing previously requested and provided data; performing operations to train or otherwise configure the optimization process for generating 3DGS models and/or other 3DSRF models; retrieving and providing information from a BICPVRDP system account for a user device and/or associated user to that device or user; etc.

After blocks 435 or 490, the routine continues to block 495 to determine whether to continue, such as until an explicit indication to terminate is received, or instead only if an explicit indication to continue is received. If it is determined to continue, the routine returns to block 405 to await additional instructions or other information, and otherwise continues to block 499 and ends.

While not illustrated with respect to the automated operations shown in the example of Figure 4, in some cases human users may further assist in facilitating some of the operations of the BICPVRDP system, such as for operator users and/or end-users of the BICPVRDP system to provide input of one or more types that is further used in subsequent automated operations. As non-exclusive examples, such human users may provide input of one or more types, with non-exclusive examples including the following: to provide input related to locations of portions of a building (*e.g.,* exterior and/or interior walls, roofs, floors ceilings, etc.) visible in captured images or otherwise associated with captured data; to provide input related to locations of devices and/or objects that are installed or otherwise placed at building locations; to assist with the identification of objects and/or other attributes from analysis of images, floor plans and/or other building information; to assist with the association of absolute data location data with image acquisition locations and/or room shapes and/or floor plans; etc. Additional details are included elsewhere herein regarding cases in which human user(s) provide input used in additional automated operations of the BICPVRDP system.

Figure 5 illustrates an example flow diagram of an IDCA (Image Capture & Analysis) system routine 500. The routine may be performed by, for example, the IDCA system 150 of Figures 1 and 3, and/or an IDCA system as described elsewhere herein, such as to provide a computer-implemented method to use one or more camera devices to acquire 360° panorama images and/or other images at image acquisition locations within buildings or other structures, and/or to use one or more other mobile devices to acquire other data (*e.g*., GPS location data, other additional images, etc.) at other data capture locations within the buildings or other structures, such as for use in subsequent generation of related floor plans and/or other mapping information. While portions of the example routine 500 are discussed with respect to acquiring particular types of images and other data at particular locations, it will be appreciated that this or a similar routine may be used to acquire video (with video frame images) and/or other data (*e.g*., audio), whether instead of or in addition to such panorama images or other perspective images and other data. In addition, while the illustrated example acquires and uses information from the interior and/or exterior of a target building, it will be appreciated that other cases may perform similar techniques in other situations, including for non-building structures and/or for other information external to one or more target buildings of interest (*e.g*., on a property on which a target building is located, such as to show yards, decks, patios, accessory structures and other outbuildings, etc.). Furthermore, some or all of the routine may be executed on a mobile device used by a user to acquire image information, and/or by a system remote from such a mobile device. In at least some cases, the routine 500 may be invoked from block 415 of routine 400 of Figure 4, with corresponding information from routine 500 provided to routine 400 as part of implementation of that block 415, and with processing control returned to block 415 of routine 400 at block 599 and/or after blocks 577 or 590 in such situations - in other cases, the routine 400 may proceed with additional operations in an asynchronous manner without waiting for such processing control to be returned (*e.g*., to proceed with other processing activities while waiting for the corresponding information from the routine 500 to be provided to routine 400).

The illustrated example of the routine begins at block 505, where instructions or information are received. At block 510, the routine determines whether the received instructions or information indicate to perform directed acquisition of visual data and/or other data representing a building (*e.g*., in accordance with supplied information about one or more acquisition locations and/or other guidance acquisition instructions), and if not continues to block 590 to perform one or more other indicated operations, including in some cases to receive one or more target images captured by one or more camera devices without directed acquisition and/or other data captured by one or more other mobile devices without directed acquisition. Otherwise, the routine proceeds to block 511 to optionally provide instructions or other information to one or more human operator users involved in performing image acquisition and/or capture of absolute location data points, such as information to improve the capture of GPS data points or other absolute location data points (*e.g*., to perform initial movement activities to improve GPS calibration before entering a building, to gather GPS data points for particular locations such as an entry doorway and/or some/all of the building exterior boundary and/or an external walkway or other external areas, etc.). In block 512, the routine then receives an indication to begin the image acquisition process by a camera device at a first image acquisition pose in or around the building (*e.g.*, from a human operator user of a camera device that will perform the target image acquisition) and/or to begin the capture of other data by a mobile device at a first data capture pose (*e.g*., from a human operator user of a mobile data capture device that will perform the data capture process, whether the same or a different user than operating the camera device). After block 512, the routine proceeds to block 515 in order to perform image acquisition activities for acquiring an image (*e.g*., a 360° panorama image) for the image acquisition location at the target building of interest using the camera device (*e.g*., via one or more fisheye lenses and/or non-fisheye rectilinear lenses on the mobile device and to provide horizontal coverage of at least 360° around a vertical axis, although in other cases other types of images and/or other types of data may be acquired), and/or to perform data capture activities for acquiring other data at the data capture pose by the mobile device (*e.g*., to capture GPS location data and optionally one or more additional second images, to capture LiDAR data or other depth data to visible surfaces, to optionally obtain IMU data and/or other acquisition metadata during the image acquisition activities, etc.), such as to concurrently capture data by both devices at locations that are proximate to each other (*e.g*., within visual range of each other or otherwise having overlapping visual data). As one non-exclusive example, the camera device may be a rotating (scanning) panorama camera equipped with a fisheye lens (*e.g*., with 180° of horizontal coverage) and/or other lens (*e.g*., with less than 180° of horizontal coverage, such as a regular lens or wide-angle lens or ultrawide lens or macro lens), or otherwise may have multiple cameras and/or lens pointed in different directions. The routine may also optionally obtain annotation and/or other information from one or more users of the camera device and/or the mobile device regarding the respective image acquisition pose and/or data capture pose and optionally a surrounding environment, such as for later use in presentation of information regarding the pose(s) and/or surrounding environment.

After block 515 is completed, the routine continues to block 520 to determine if there are more image acquisition poses at which to acquire target images using the camera device and/or more data capture poses at which to acquire other data using the mobile device, such as based on corresponding information provided by one or more users of the device(s) and/or received in block 505 - in some cases, the IDCA routine will acquire only one or more target images captured by the camera device at a single image acquisition pose and/or other data captured at a single data capture pose, and then proceed to block 577 to provide those target image(s) and/or other data and optionally corresponding information (*e.g*., to the BICPVRDP system and/or MIGM system for further use before receiving additional instructions or information to acquire one or more next images at one or more next image acquisition poses and/or one or more other groups of data at one or more next data capture poses). If there are more image acquisition poses at which to acquire additional images from the camera device at the current time and/or more data capture poses at which to acquire other data from the mobile device at the current time, the routine continues to block 522 to optionally initiate the acquisition of linking information (*e.g*., acceleration data, visual data, etc.) during movement of the device(s) along travel path(s) away from the current pose(s) and towards next pose(s) at the building. The acquired linking information may include additional sensor data (*e.g*., from one or more IMU, or inertial measurement units, on the mobile device or otherwise carried by the user; from one or more LiDAR or other depth-sensing sensors; from one or more GPS sensors; etc.) and/or additional visual information (*e.g*., images, video, etc.) recorded during such movement. Initiating the acquisition of such linking information may be performed in response to an explicit indication from a user of a device or based on one or more automated analyses of information recorded from a device. In addition, the routine may further optionally monitor the motion of a device in some cases during movement to the next acquisition pose, and provide one or more guidance cues (*e.g*., to the user) regarding the motion of the device, quality of the sensor data and/or visual information being acquired, associated lighting/environmental conditions, advisability of acquiring images and/or other data at a next pose, and any other suitable aspects of acquiring the linking information. Similarly, the routine may optionally obtain annotation and/or other information from the user(s) regarding the travel path(s), such as for later use in presentation of information regarding a travel path or a resulting inter-pose connection. In block 524, the routine determines that the camera device has arrived at the next image acquisition pose and/or that the mobile device has arrived at the next data capture pose (*e.g*., based on an indication from a user, based on movement of the device stopping for at least a predefined amount of time, based on an amount of time passing since a last image acquisition and/or data capture, based on an amount of distance having been moved since a last image acquisition and/or data capture, etc.), for use as the new current image acquisition pose and/or data capture pose, respectively, and returns to block 515 to perform further target image acquisition activities for the new current image acquisition pose and/or further capture of other data for the new current data capture pose.

If it is instead determined in block 520 that there are not any more image acquisition poses at which to acquire additional target images for the current building or other structure at the current time and not any more data capture poses at which to acquire additional other data for the current building or other structure at the current time, the routine proceeds to block 545 to optionally preprocess acquired 360° target panorama images and/or other acquired data before subsequent use (*e.g*., for generating related mapping information, for providing information about structural elements or other objects of rooms or other enclosing areas, etc.), such as to perform blur analysis and/or motion filtering, to produce images of a particular type and/or in a particular format (*e.g*., to perform an equirectangular projection for each such image, with straight vertical data such as the sides of a typical rectangular door frame or a typical border between 2 adjacent walls remaining straight, and with straight horizontal data such as the top of a typical rectangular door frame or a border between a wall and a floor remaining straight at a horizontal midline of the image but being increasingly curved in the equirectangular projection image in a convex manner relative to the horizontal midline as the distance increases in the image from the horizontal midline and/or as the distance to the acquisition location decreases). In block 577, the images and other captured data and any associated generated or obtained information is stored for later use, and optionally provided to one or more recipients (*e.g*., to block 415 of routine 400 if invoked from that block) - Figures 6A-6B illustrate one example of a routine for generating a floor plan representation of a building interior from the captured images and other data.

If it is instead determined in block 510 that the instructions or other information received in block 505 are not to acquire images and other data representing a building interior using directed capture, the routine continues instead to block 590 to perform any other indicated operations as appropriate, such as to receive one or more target images captured by one or more camera devices at one or more image acquisition locations without directed acquisition, to receive other data captured by one or more other mobile devices at one or more data capture locations without directed acquisition, to respond to requests for generated and stored information (*e.g*., to identify one or more panorama images that match one or more specified search criteria, etc.), to obtain and store other information about users of the system, to configure parameters to be used in various operations of the system (*e.g*., based at least in part on information specified by a user of the system, such as a user of a mobile device who acquires one or more building interiors, an operator user of the IDCA system, etc.), to perform any housekeeping tasks, etc.

Following blocks 577 or 590, the routine proceeds to block 595 to determine whether to continue, such as until an explicit indication to terminate is received, or instead only if an explicit indication to continue is received. If it is determined to continue, the routine returns to block 505 to await additional instructions or information, and if not proceeds to block 599 and ends.

While not illustrated with respect to the automated operations shown in the example of Figure 5, in some cases human users may further assist in facilitating some of the operations of the IDCA system, such as for operator users and/or end-users of the IDCA system to provide input of one or more types that is further used in subsequent automated operations. As non-exclusive examples, such human users may provide input of one or more types as follows: to provide input to assist with determination of acquisition locations, such as to provide input in blocks 512 and/or 524 that is used as part of the automated operations for that block; to perform activities in block 515 related to image acquisition (*e.g*., to participate in the image acquisition, such as to activate the shutter, implement settings on the camera device and/or associated sensor or component, rotate the camera device as part of acquiring a panorama image, etc.; to set the location and/or orientation of the camera device and/or associated sensors or components; etc.); to perform activities in block 515 related to other data capture (*e.g*., to participate in the capture of the other data); to provide input in blocks 515 and/or 522 that is used as part of subsequent automated operations, such as labels, annotations or other descriptive information with respect to particular images, surrounding rooms and/or objects in the rooms; etc. Additional details are included elsewhere herein regarding cases in which one or more human users provide input that is further used in additional automated operations of the IDCA system.

Figures 6A-6B illustrate an example of a flow diagram for a MIGM (Mapping Information Generation Manager) system routine 600. The routine may be performed by, for example, execution of the MIGM system 160 of Figures 1 and 3, and/or a MIGM system as described elsewhere herein, such as to provide a computer-implemented method to determine a room shape for a room (or other defined area) by analyzing information from one or more images acquired in the room (*e.g*., one or more 360° target panorama images, one or more additional second images, etc.), to generate a partial or complete floor plan for a building or other defined area based at least in part on one or more images of the area and optionally additional data acquired by a mobile computing device and using determined room shapes, and/or to generate other mapping information for a building or other defined area based at least in part on one or more images of the area and optionally additional data acquired by a mobile computing device. In the example of Figures 6A-6B, the determined room shape for a room may be a 2D room shape to represent the locations of the walls of the room or a 3D fully closed combination of planar surfaces to represent the locations of walls and ceiling and floor of the room or a 2.5D combination of planar surfaces to represent the locations of at least the walls of the room without complete ceiling and/or floor data, and the generated mapping information for a building (*e.g*., a house) may include a 2D floor plan and/or 3D computer model floor plan and/or 2.5D computer model floor plan, but in other cases, other types of room shapes and/or mapping information may be generated and used in other manners, including for other types of structures and defined areas, as discussed elsewhere herein. In at least some cases, the routine 600 may be invoked from block 420 of routine 400 of Figure 4, with corresponding information from routine 600 provided to block 420 of routine 400 as part of implementation of that block, and with processing control returned to block 420 of routine 400 at block 699 or after blocks 688 and/or 699 in such situations - in other cases, the routine 400 may proceed with additional operations in an asynchronous manner without waiting for such processing control to be returned (*e.g*., to wait to proceed once the corresponding information from routine 600 is provided to routine 400, to proceed with other processing activities while waiting for the corresponding information from the routine 600 to be provided to routine 400, etc.).

The illustrated example of the routine begins at block 605, where information or instructions are received. The routine continues to block 610 to determine whether image information and optionally other captured data is already available to be analyzed for one or more rooms (*e.g*., for some or all of an indicated building, such as based on one or more such images received in block 605 as previously generated by the IDCA routine), or if such image information instead is to be currently acquired. If it is determined in block 610 to currently acquire some or all of the image information, the routine continues to block 612 to acquire such information, optionally waiting for one or more users or devices to move throughout one or more rooms of a building and acquire panoramas or other target images at one or more image acquisition locations in one or more of the rooms or other areas (*e.g*., at multiple acquisition locations in each room of the building) and/or to acquire other second images and optionally other data at one or more data capture locations in the one or more rooms or other areas (*e.g*., at multiple data capture locations in each room of the building), optionally along with metadata information regarding the acquisition and/or interconnection linking information related to movement between acquisition locations, as discussed in greater detail elsewhere herein - implementation of block 612 may, for example, include invoking an IDCA system routine to perform such activities, with Figure 5 providing one example of an IDCA system routine for performing such image acquisition. If it is instead determined in block 610 not to currently acquire the images and optional other data, the routine continues instead to block 615 to obtain one or more existing panoramas or other target images from one or more image acquisition locations in one or more rooms or other areas (*e.g*., multiple images acquired at multiple acquisition locations that include at least one image and acquisition location in each room of a building) and to obtain existing other data captured at one or more data capture locations in the one or more rooms or other areas, optionally along with metadata information regarding the acquisition and/or interconnection linking information related to movement between the acquisition locations, and optionally along with determined positions of acquisition locations, such as may have been supplied in block 605 along with the corresponding instructions in some situations.

After blocks 612 or 615, the routine continues to block 620, where it determines whether to generate mapping information that includes an inter-linked set of target panorama images (or other images) for a building or other group of rooms (referred to at times as a 'virtual tour', such as to enable an end-user to move from any one of the images of the linked set to one or more other images to which that starting current image is linked, including in some cases via selection of a user-selectable control for each such other linked image that is displayed along with a current image, optionally by overlaying visual representations of such user-selectable controls and corresponding inter-image directions on the visual data of the current image, and to similarly move from that next image to one or more additional images to which that next image is linked, etc.), and if so continues to block 625. The routine in block 625 selects pairs of at least some of the images (*e.g*., based on the images of a pair having overlapping visual content), and if acquisition location position information is not already determined and provided, determines, for each pair, relative directions between the images of the pair based on shared visual content and/or on other acquired linking interconnection information (*e.g*., movement information) related to the images of the pair (whether movement directly from the location at which one image of a pair was acquired to the location at which the other image of the pair was acquired, or instead movement between those starting and ending locations via one or more other intermediary locations of other images) - if acquisition location position information is already determined and provided, that information may be used to determine the relative direction information between pairs of images, whether instead of or in addition to the visual data analysis. The routine in block 625 may further optionally use at least the relative direction information for the pairs of images to determine global relative positions of some or all of the images to each other in a common coordinate system, and/or generate the inter-image links and corresponding user-selectable controls as noted above. Additional details are included elsewhere herein regarding creating such a linked set of images.

After block 625, or if it is instead determined in block 620 that the instructions or other information received in block 605 are not to determine a linked set of images, the routine continues to block 635 to determine whether the instructions received in block 605 indicate to generate other mapping information for an indicated building (*e.g*., a floor plan), and if so the routine continues to perform some or all of blocks 637-685 to do so, and otherwise continues to block 690. In block 637, the routine optionally obtains additional information about the building, such as from activities performed during acquisition and optionally analysis of the images, and/or from one or more external sources (*e.g*., online databases, information provided by one or more end-users, etc.) - such additional information may include, for example, exterior dimensions and/or shape of the building, additional images and/or annotation information acquired corresponding to particular locations external to the building (*e.g*., surrounding the building and/or for other structures on the same property, from one or more overhead locations, etc.), additional images and/or annotation information acquired corresponding to particular locations within the building (optionally for locations different from acquisition locations of the acquired panorama images or other images), determined acquisition location position information, etc.

After block 637, the routine continues to block 640 to select the next room (beginning with the first) for which one or more images (*e.g*., 360° target panorama images, other target images, other second images, etc.) acquired in the room are available, and to analyze the visual data of the image(s) for the room to determine a room shape (*e.g*., by determining at least wall locations), optionally along with determining uncertainty information about walls and/or other parts of the room shape, and optionally including identifying other wall and floor and ceiling elements (*e.g*., wall structural elements/objects, such as windows, doorways and stairways and other inter-room wall openings and connecting passages, wall borders between a wall and another wall and/or ceiling and/or floor, etc.) and their positions within the determined room shape of the room - if acquisition location position information is already determined and provided, that information may be used as part of determining the room shape information, whether instead of or in addition to the visual data analysis. In some cases, the room shape determination may include using boundaries of the walls with each other and at least one of the floor or ceiling to determine a 2D room shape (*e.g.*, using one or trained machine learning models), while in other cases the room shape determination may be performed in other manners (*e.g*., by generating a 3D point cloud of some or all of the room walls and optionally the ceiling and/or floor, such as by analyzing at least visual data of the panorama image and optionally additional data acquired by an mobile data capture device or associated mobile computing device, optionally using one or more of SfM (Structure from Motion) or SLAM (Simultaneous Location And Mapping) or MVS (Multi-View Stereo) analysis). In addition, the activities of block 645 may further optionally determine and use acquisition location position information for each of the analyzed images (*e.g*., within a corresponding determined room shape), and/or obtain and use additional metadata for each panorama image (*e.g*., acquisition height information of the camera device or other mobile data capture device used to acquire a panorama image relative to the floor and/or the ceiling). Additional details are included elsewhere herein regarding determining room shapes and identifying additional information for the rooms. After block 640, the routine continues to block 645, where it determines whether there are more rooms for which to determine room shapes based on images acquired in those rooms, and if so returns to block 640 to select the next such room for which to determine a room shape.

If it is instead determined in block 645 that there are not more rooms for which to generate room shapes, the routine continues to block 660 to determine whether to further generate at least a partial floor plan for the building (*e.g*., based at least in part on the determined room shape(s) from block 640 and on determined acquisition location position information if available, and optionally further information regarding how to position the determined room shapes relative to each other). If not, such as when determining only one or more room shapes without generating further mapping information for a building (*e.g*., to determine the room shape for a single room based on one or more images acquired in the room by the IDCA system), the routine continues to block 688. Otherwise, the routine continues to block 665 to retrieve one or more room shapes (*e.g*., room shapes generated in block 645) or otherwise obtain one or more room shapes (*e.g*., based on human-supplied input) for rooms of the building, whether 2D or 3D room shapes, and then continues to block 670. In block 670, the routine uses the one or more room shapes to create an initial floor plan (*e.g*., an initial 2D floor plan using 2D room shapes and/or an initial 3D floor plan using 3D room shapes), such as a partial floor plan that includes one or more room shapes but less than all room shapes for the building, or a complete floor plan that includes all room shapes for the building. If there are multiple room shapes, the routine in block 670 further determines positioning of the room shapes relative to each other, such as by using visual overlap between images from multiple acquisition locations to determine relative positions of those acquisition locations and of the room shapes surrounding those acquisition locations, and/or by using other types of information (*e.g*., using connecting inter-room passages between rooms, optionally applying one or more constraints or optimizations; using determined acquisition location position information; etc.). In at least some cases, the routine in block 670 further refines some or all of the room shapes by generating a binary segmentation mask that covers the relatively positioned room shape(s), extracting a polygon representing the outline or contour of the segmentation mask, and separating the polygon into the refined room shape(s). Such a floor plan may include, for example, relative position and shape information for the various rooms without providing any actual dimension information for the individual rooms or building as a whole, and may further include multiple linked or associated sub-maps (*e.g*., to reflect different stories, levels, sections, etc.) of the building. The routine further optionally associates positions of the doors, wall openings and other identified wall elements on the floor plan.

After block 670, the routine optionally performs one or more steps 680-685 to determine and associate additional information with the floor plan. In block 680, the routine optionally estimates the dimensions of some or all of the rooms, such as from analysis of images and/or their acquisition metadata or from overall dimension information obtained for the exterior of the building, and associates the estimated dimensions with the floor plan - it will be appreciated that if sufficiently detailed dimension information were available, architectural drawings, blueprints, etc. may be generated from the floor plan. After block 680, the routine continues to block 683 to optionally associate further information with the floor plan (*e.g*., with particular rooms or other locations within the building), such as additional existing images with specified positions and/or annotation information. In block 685, if the room shapes from block 645 are not 3D room shapes, the routine further optionally estimates heights of walls in some or all rooms, such as from analysis of images and optionally sizes of known objects in the images, as well as height information about a camera when the images were acquired, and uses that height information to generate 3D room shapes for the rooms. The routine further optionally uses the 3D room shapes (whether from block 640 or block 685) to generate a 3D computer model floor plan of the building, with the 2D and 3D floor plans being associated with each other - in other cases, only a 3D computer model floor plan may be generated and used (including to provide a visual representation of a 2D floor plan if so desired by using a horizontal slice of the 3D computer model floor plan).

After block 685, or if it is instead determined in block 660 not to determine a floor plan, the routine continues to block 688 to store the determined room shape(s) and/or generated mapping information and/or other generated information, to optionally provide some or all of that information to one or more recipients (*e.g*., to block 420 of routine 400 if invoked from that block), and to optionally further use some or all of the determined and generated information, such as to provide the generated 2D floor plan and/or 3D computer model floor plan for display on one or more client devices and/or to one or more other devices for use in automating navigation of those devices and/or associated vehicles or other entities, to similarly provide and use information about determined room shapes and/or a linked set of images and/or about additional information determined about contents of rooms and/or passages between rooms, etc.

If it is instead determined in block 635 that the information or instructions received in block 605 are not to generate mapping information for an indicated building, the routine continues instead to block 690 to perform one or more other indicated operations as appropriate. Such other operations may include, for example, receiving and responding to requests for previously generated floor plans and/or previously determined room shapes and/or other generated information (*e.g*., requests for such information for display on one or more client devices, requests for such information to provide it to one or more other devices for use in automated navigation, etc.), obtaining and storing information about buildings for use in later operations (*e.g*., information about dimensions, numbers or types of rooms, total square footage, adjacent or nearby other buildings, adjacent or nearby vegetation, exterior images, etc.), etc.

After blocks 688 or 690, the routine continues to block 695 to determine whether to continue, such as until an explicit indication to terminate is received, or instead only if an explicit indication to continue is received. If it is determined to continue, the routine returns to block 605 to wait for and receive additional instructions or information, and otherwise continues to block 699 and ends.

While not illustrated with respect to the automated operations shown in the example case of Figures 6A-6B, in some cases human users may further assist in facilitating some of the operations of the MIGM system, such as for operator users and/or end-users of the MIGM system to provide input of one or more types that is further used in subsequent automated operations. As non-exclusive examples, such human users may provide input of one or more types as follows: to provide input to assist with the linking of a set of images, such as to provide input in block 625 that is used as part of the automated operations for that block (*e.g*., to specify or adjust initial automatically determined directions between one or more pairs of images, to specify or adjust initial automatically determined final global positions of some or all of the images relative to each other, etc.); to provide input in block 637 that is used as part of subsequent automated operations, such as one or more of the illustrated types of information about the building; to provide input with respect to block 640 that is used as part of subsequent automated operations, such as to specify or adjust initial automatically determined element locations and/or estimated room shapes and/or to manually combine information from multiple estimated room shapes for a room (*e.g*., separate room shape estimates from different images acquired in the room) to create a final room shape for the room and/or to specify or adjust initial automatically determined information about a final room shape, etc.; to provide input with respect to block 670, that is used as part of subsequent operations, such as to specify or adjust initial automatically determined positions of room shapes within a floor plan being generated and/or to specify or adjust initial automatically determined room shapes themselves within such a floor plan; to provide input with respect to one or more of blocks 680 and 683 and 685 that is used as part of subsequent operations, such as to specify or adjust initial automatically determined information of one or more types discussed with respect to those blocks; and/or to specify or adjust initial automatically determined pose information (whether initial pose information or subsequent updated pose information) for one or more of the panorama images; etc. Additional details are included elsewhere herein regarding examples in which human user(s) provide input that is further used in additional automated operations of the MIGM system.

Figures 7A-7B illustrate an example flow diagram for a Building Information Viewer system routine 700, such as may be implemented by the BICPVRDP client application in some cases. The routine may be performed by, for example, execution of a BICPVRDP client application 154 of mobile device 175 of Figures 1 or 3 and/or of such a client application or other building information viewer system otherwise executing on a mobile device 175 and/or other computing system or device as described elsewhere herein, or on a device 185 to receive data capture instructions and/or feedback, such as to provide a computer-implemented method to receive and present building information (e.g., individual images; floor plans and/or other mapping-related information, such as determined room structural layouts/shapes, a virtual tour of inter-linked images, etc.; generated building description information; videos; etc.). In the example of Figures 7A-7B, the presented information is for one or more buildings (such as an exterior and/or interior of a house), but in other cases, other types of mapping information may be presented for other types of buildings or environments and used in other manners, as discussed elsewhere herein.

The illustrated example of the routine begins at block 705, where instructions or information are received. At block 710, the routine determines whether the received instructions or information in block 705 are to present determined information for one or more target buildings, and if so continues to block 715 to determine whether the received instructions or information in block 705 are to select one or more target buildings using specified criteria (*e.g*., based at least in part on an indicated building), and if not continues to block 725 to obtain an indication of a target building to use from the user (*e.g*., based on a current user selection, such as from a displayed list or other user selection mechanism; based on information received in block 705; etc.). Otherwise, if it is determined in block 715 to select one or more target buildings from specified criteria, the routine continues instead to block 720, where it obtains indications of one or more search criteria to use, such as from current user selections or as indicated in the information or instructions received in block 705, and then searches stored information about buildings (*e.g*., floor plans, videos, generated textual descriptions, etc.) to determine one or more of the buildings that satisfy the search criteria or otherwise obtains indications of one or more such matching target buildings, such as information that is currently or previously generated by the BICPVRDP system (with one example of operations of such a system being further discussed with respect to Figure 4, and with the BICPVRDP system optionally invoked in block 720 to obtain such information). In the illustrated example, the routine then further optionally selects a best match target building from the one or more determined target buildings (*e.g*., the target building with the highest similarity or other matching rating for the specified criteria, or using another selection technique indicated in the instructions or other information received in block 705), while in other cases the routine may instead present information for multiple target buildings that satisfy the search criteria (*e.g*., in a ranked order based on degree of match; in a sequential manner, such as to present one or more videos for each of multiple buildings in a sequence; in a simultaneous manner, such as on a map of a surrounding area; etc.) and receive a user selection of the best match target building from the multiple candidate target buildings.

After blocks 720 or 725, the routine continues to block 730 to determine whether the instructions or other information received in block 705 indicate to present one or more maps with one or more visual representations of a building model for each of one or more target buildings, and if so continues to block 771 to do so, including to retrieve information about each of the target building(s) that includes a generated building model (*e.g*., floor plan model and/or a 3D volumetric model) along with associated absolute location data. After block 771, the routine continues to block 773 to retrieve or otherwise generate information about one or more images or other maps for one or more geographical areas having a plurality of properties including properties on which the target building(s) are located along with other properties, such as for a neighborhood or city or otherwise for surroundings of the target building(s) (*e.g*., one or more maps that match criteria specified in the information of block 705 or are otherwise determined, such as with respect to zoom level and/or map size, and optionally using preference information or other information specific to a recipient), with each map in some cases including one or more images having visual data for at least some of an area covered by the map(s) (*e.g*., a satellite image or other overhead image(s), a street-level image that includes the target building(s), etc.). After block 773, the routine continues to block 775 to determine, for each target building, an area on the image(s) or other map corresponding to the target building's model's absolute location data, to overlay a visible representation of each target building's model on the corresponding area of the image(s) or other map, including to fit each model to a visible representation of the corresponding target building if one is present) - in some cases, the routine may further determine what types of information associated with the floor plan and/or 3D volumetric model to include in a corresponding overlaid model visual representation, such as based at least in part on a zoom level and/or on a size of the overlaid visual representation, and optionally using preference information or other information specific to a user recipient (*e.g*., based on one or more prior selections). In block 777, the routine selects a current view of the image(s) or other map that includes the overlaid model visual representation(s) (*e.g*., to select a zoom level, subset of the image(s) or other map, etc.), and continues to block 779 to display or otherwise present the image(s) or other map with the overlaid floor plan visual representation in a GUI, and waits for a user selection (or optionally a timeout).

If it is instead determined in block 730 that the instructions or other information received in block 705 do not indicate to present one or more building floor plans on one or more images or other map, the routine continues to block 732 to determine if the instructions or other information received in block 705 indicate to present an interactive 3D building visual representation of a building using new synthetic images generated by a 3DSRF model of the building, and if so the routine continues to block 734 to receive an indication of a current pose inside or around building, optionally via virtual movement controlled via user input in a displayed GUI from a prior or default pose to the current pose, including in some cases by limiting and/or directing pose selection, such as to limit exterior building view selection to 2 degrees of freedom (*e.g*., corresponding to a defined view cone with a vertical conical shape that is centered around one or more building positions and is perpendicular to the ground and increasing in diameter as height above ground increases), and such as to direct orientation for exterior building location to include at least some of the building exterior). The routine then sends a request to BICPVRDP system to use a 3DSRF model for the building to generate a new building image for the current pose (*e.g*., a rendered rasterized view visualization), and receives the corresponding new building image. The routine then continues from block 732 to block 779 to present the current new building image, and to optionally receive requests for further new images to generate with respect to block 779 as discussed above.

if it is determined in block 783 that the user selection corresponds to adjusting the current view for the current map, the routine continues to block 785 to update the current view in accordance with the user selection, and then returns to block 779 to update the displayed or otherwise presented information accordingly. The user selection and corresponding updating of the current view may include, for example, displaying or otherwise presenting a piece of associated linked information that the user selects (*e.g*., additional or different building information of one or more types for one or more target buildings, such as in response to a user selection of a visual representation of a particular target building and/or the selection of one or more other user controls; additional or different neighborhood or other surroundings information of one or more types with respect to one or more target buildings, such as in response to a user selection of a visual representation of a particular target building and/or the selection of one or more other user controls; etc.), and/or changing how the current view is displayed (*e.g*., zooming in or out; rotating and/or translating an area of the map that is displayed; etc.). If it is instead determined in block 783 that the user selection is not to display further information for the current target building and/or map (*e.g*., to display information for another building and/or map, to end the current display operations, etc.) or if the wait in block 781 has a timer expiration, the routine continues instead to block 795, and returns to block 705 to perform operations for the user selection if the user selection involves such further operations.

If it is instead determined in block 732 that the instructions or other information received in block 705 do not indicate to present an interactive 3D building visual representation of an exterior of a building, the routine continues to block 738 to retrieve other information for the target building for display (*e.g*., a floor plan; other generated mapping information for the building, such as a group of inter-linked images for use as part of a virtual tour; generated building description information; etc.), and optionally indications of associated linked information for the building interior and/or a surrounding location external to the building, and/or information about one or more generated explanations or other descriptions of the target building, and selects an initial view of the retrieved information (*e.g*., a view of the floor plan, a particular room shape, a particular image, some or all of the generated building description information, etc.). After blocks 734 or 738, the routine in block 740 then displays or otherwise presents the current view of the retrieved information from block 738 or the retrieved/generated information from block 734 in a GUI, and waits in block 745 for a user selection (or optionally a timeout). After a user selection in block 745, if it is determined in block 750 that the user selection corresponds to adjusting the current view for the current target building (*e.g*., to change one or more aspects of the current view), the routine continues to block 755 to update the current view in accordance with the user selection (optionally interacting with the BICPVRDP system to obtain a modified view based on a user interaction with the previously presented view, or instead using previously received 3D visual representation(s) to generate the modified view), and then returns to block 740 to update the displayed or otherwise presented information accordingly. The user selection and corresponding updating of the current view may include, for example, displaying or otherwise presenting a piece of associated linked information that the user selects (*e.g*., overlaying a selected type of information on a current view, such a particular image associated with a displayed visual indication of a determined acquisition location, POI information of one or more types, etc.; a particular other image linked to a current image and selected from the current image using a user-selectable control overlaid on the current image to represent that other image; etc.), and/or changing how the current view is displayed (*e.g*., zooming in or out; rotating information if appropriate; selecting a new portion of the floor plan to be displayed or otherwise presented, such as with some or all of the new portion not being previously visible, or instead with the new portion being a subset of the previously visible information; etc.). If it is instead determined in block 750 that the user selection is not to display further information for the current target building (*e.g*., to display information for another building, to end the current display operations, etc.) or if the wait in block 745 has a timer expiration, the routine continues instead to block 795, and returns to block 705 to perform operations for the user selection if the user selection involves such further operations.

If it is instead determined in block 710 that the instructions or other information received in block 705 are not to present information representing a building, the routine continues instead to block 760 to determine whether the instructions or other information received in block 705 indicate to identify other images (if any) corresponding to one or more indicated target images, and if so continues to blocks 762-764 to perform such activities. In particular, the routine in block 762 receives the indications of the one or more target images for the matching (such as from information received in block 705 or based on one or more current interactions with a user) along with one or more matching criteria (*e.g*., an amount of visual overlap), and in block 764 identifies one or more other images (if any) that match the indicated target image(s), such as by interacting with the IDCA and/or MIGM systems to obtain the other image(s). The routine then displays or otherwise provides information in block 764 about the identified other image(s), such as to provide information about them as part of search results, to display one or more of the identified other image(s) in a GUI, etc. If it is instead determined in block 760 that the instructions or other information received in block 705 are not to identify other images corresponding to one or more indicated target images, the routine continues instead to block 766 to determine whether the instructions or other information received in block 705 correspond to obtaining and providing guidance acquisition instructions during an image acquisition session with respect to one or more indicated target images (*e.g*., a most recently acquired image), and if so continues to block 768, and otherwise continues to block 790. In block 768, the routine obtains information about guidance acquisition instructions of one or more types, such as by interacting with the IDCA system, and displays or otherwise provides information in block 768 about the guidance acquisition instructions in a GUI, such as by overlaying the guidance acquisition instructions on a partial floor plan and/or recently acquired image in manners discussed in greater detail elsewhere herein.

In block 790, the routine continues instead to perform other indicated operations as appropriate, such as to configure parameters to be used in various operations of the system (*e.g*., based at least in part on information specified by a user of the system, such as a user of a mobile device who acquires one or more building interiors, an operator user of the BICPVRDP and/or MIGM systems, etc., including for use in personalizing information display for a particular recipient user in accordance with his/her preferences or other information specific to that recipient), to obtain and store other information about users of the system (*e.g*., preferences or other information specific to that user), to respond to requests for generated and stored information, to perform any housekeeping tasks, etc.

Following blocks 764 or 768 or 790, or if it is determined in block 750 that the user selection does not correspond to the current building (or a timeout occurs) or in block 783 that the user selection does not correspond to the current map (or a timeout occurs), the routine proceeds to block 795 to determine whether to continue, such as until an explicit indication to terminate is received, or instead only if an explicit indication to continue is received. If it is determined to continue (including if the user made a selection in block 745 related to a new building to present), the routine returns to block 705 to await additional instructions or information (or to continue directly on to block 730 if the user made a selection in block 745 related to a new building to present), and if not proceeds to step 799 and ends.

Non-exclusive example embodiments described herein are further described in the following clauses.

A01. A computer-implemented method for one or more computing devices to perform automated operations comprising:
obtaining, by the one or more computing devices, a plurality of images of an exterior of a building that are captured from a plurality of three-dimensional (3D) capture locations and orientations around at least some of the exterior;
generating, by the one or more computing devices and based at least in part on analysis of visual data of the plurality of images, a 3D spatial radiance field model that encodes visual appearances of a plurality of surfaces of the exterior of the building; and
controlling, by the one or more computing devices and via a displayed graphical user interface (GUI), presentation of one or more new images from one or more indicated 3D view locations and orientations, wherein at least one of the indicated 3D view locations and orientations is distinct from the plurality of 3D capture locations and orientations, and wherein the controlling includes:
   presenting, by the one or more computing devices, a first image of some of the exterior of the building from a first 3D view location and orientation;
   restricting, by the one or more computing devices, virtual movement via the GUI from the first 3D view location and orientation to one of the indicated 3D view locations and orientations that is selected via user input, including limiting, from six degrees of freedom available for changes in view locations and orientations, the virtual movement to two degrees of freedom and to be centered on one or more building positions;
   generating, by the one or more computing devices and using the generated 3D spatial radiance field model, one of the new images from the one indicated 3D view location and orientation; and
   presenting, by the one or more computing devices, the one new image in the GUI.

A02. A computer-implemented method for one or more computing devices to perform automated operations comprising:
directing, by the one or more computing devices, capture of a plurality of images of an exterior of a building from a plurality of three-dimensional (3D) capture locations and orientations, the capture including capturing subsets of the plurality of images during each of multiple traversals by one or more cameras around at least some of the exterior at a respective one of multiple distances from at least one building position and a respective one of multiple heights above a ground surface around the exterior, wherein the respective one distance for a horizontal traversal increases as the respective one height for that horizontal traversal increases;
generating, by the one or more computing devices and based at least in part on analysis of visual data of the plurality of images, a 3D spatial radiance field model that encodes visual appearances of a plurality of surfaces of the exterior of the building; and
controlling, by the one or more computing devices and via a displayed graphical user interface (GUI), presentation of a plurality of new images of the exterior of the building from a plurality of indicated 3D view locations and orientations, at least some of the plurality of indicated 3D view locations and orientations being distinct from the plurality of 3D capture locations and orientations, and the controlling including, for each of the plurality of new images:
   restricting, by the one or more computing devices, virtual movement via the GUI from a current 3D view location and orientation to a respective one of the plurality of indicated 3D view locations and orientations, including limiting, from six degrees of freedom available for changing view locations and orientations, the virtual movement to two degrees of freedom while being centered on one or more building positions;
   generating, by the one or more computing devices and based on user input that selects the respective one indicated 3D view location and orientation, and using the generated 3D spatial radiance field model, that new image from that respective one indicated 3D view location and orientation; and
   presenting, by the one or more computing devices, that new image in the GUI.

A03. A computer-implemented method for one or more computing devices to perform automated operations comprising:
directing capture of a plurality of images of an exterior of a building that are from a plurality of three-dimensional (3D) capture locations and orientations and that each shows some of the exterior and that collectively include visual coverage of substantially all of the exterior, the capture including capturing one or more first subsets of the plurality of images from one or more cameras moved along a ground surface around the exterior at one or more first heights during one or more first traversals of at least some of the exterior, and further including capturing second subsets of the plurality of images during multiple second traversals by a flying drone device with at least one camera around at least some of the exterior at multiple distances from at least one building position and at multiple heights above the ground surface;
generating, based at least in part on analysis of visual data of the plurality of images, a 3D spatial radiance field model that encodes visual appearances of a plurality of surfaces of the exterior of the building; and
providing the generated 3D spatial radiance field model for use in generating new images of the exterior of the building from new indicated 3D view locations and orientations that are separate from the plurality of 3D capture locations and orientations.

A04. The computer-implemented method of any one of clauses A01-A03 wherein the automated operations further include directing capture of the plurality of images to collectively include visual coverage of substantially all of the exterior, the capture including capturing one or more first subsets of the plurality of images from one or more cameras moved along a ground surface around the exterior at one or more first heights during one or more first traversals of at least some of the exterior, and further including capturing second subsets of the plurality of images during multiple second traversals by a flying drone device with at least one camera around at least some of the exterior at multiple distances from at least one building position and at multiple heights above the ground surface.

A05. The computer-implemented method of any one of clauses A01-A04 wherein the limiting of the virtual movement to the two degrees of freedom includes enabling movement along a substantially conical shape having a vertical axis that is perpendicular to a ground surface and passes through the building and having an increasing horizontal circumference as height above the ground surface increases, including providing a first type of virtual movement that is substantially horizontal and lateral to the exterior along a surface of the substantially conical shape and providing a second type of virtual movement that is vertical along the surface of the substantially conical shape and in which distance from the exterior increases as a height above the ground surface.

A06. The computer-implemented method of any one of clauses A01-A05 wherein the generated 3D spatial radiance field model is a 3D Gaussian Splat model, and wherein the limiting of the virtual movement to the two degrees of freedom includes providing a first type of virtual movement that is substantially horizontal and lateral to the exterior and providing a second type of virtual movement that simultaneously changes height above a ground surface and distance from the exterior and a view orientation to maintain centering on the one or more building positions.

A07. The computer-implemented method of any one of clauses A01-A06 wherein the limiting of the virtual movement to the two degrees of freedom includes providing a first type of virtual movement that is substantially horizontal and towards or away from the exterior and providing a second type of virtual movement that is substantially horizontal and lateral to the exterior.

A08. The computer-implemented method of any one of clauses A01-A07 wherein the automated operations further include:
overriding, by the one or more computing devices and via additional user input via the GUI, the limiting of the virtual movement to the two degrees of freedom, including enabling three or more degrees of freedom for changes in view locations and orientations;
generating, by the one or more computing devices and based on further user input that selects a further indicated 3D view location and orientation using the enabled three or more degrees of freedom, and using the generated 3D spatial radiance field model, a further new image from the further indicated 3D view location and orientation; and
presenting, by the one or more computing devices, the further new image in the GUI.

A09. The computer-implemented method of any one of clauses A01-A08 wherein the automated operations further include:
generating, by the one or more computing devices and using multiple additional images with visual coverage directed outwards from the exterior of the building towards surroundings of the building, a second 3D spatial radiance field model that encodes visual appearances of a plurality of additional surfaces of at least some of the surroundings of the building based at least in part on analysis of visual data of the multiple additional images;
generating, by the one or more computing devices and using the second 3D spatial radiance field model, one or more second new images of the at least some surroundings; and
presenting, by the one or more computing devices, the generated one or more second new images.

A10. The computer-implemented method of any one of clauses A01-A09 wherein the automated operations further include:
generating, by the one or more computing devices and using multiple additional images with visual coverage of one or more additional structures that are on a property on which the building is located and that are separate from the building, a second 3D spatial radiance field model that encodes visual appearances of a plurality of additional surfaces on the one or more additional structures based at least in part on analysis of visual data of the multiple additional images;
generating, by the one or more computing devices and using the second 3D spatial radiance field model, one or more second new images of at least one of the additional structures; and
presenting, by the one or more computing devices, the generated one or more second new images.

A11. The computer-implemented method of any one of clauses A01-A10 wherein the automated operations further include at least one of:
generating, by the one or more computing devices and in response to additional first user input received via the GUI, an additional one of the one or more new images, and presenting the additional new image, wherein the plurality of images includes one or more first subsets from one or more cameras moved along a ground surface around the exterior at one or more first heights during one or more first traversals of at least some of the exterior, and further includes second subsets during multiple second traversals by a flying drone device with at least one camera around at least some of the exterior at multiple distances from at least one building position and at multiple heights above the ground surface that are above the one or more first heights, wherein the one indicated 3D view location and orientation for the one new image is from a height above the ground surface that is above a lowest of the multiple heights, and wherein the additional one new image is from an additional indicated 3D view location and orientation that is below a highest of the one or more first heights; or
presenting, by the one or more computing devices, an initial image that shows a plurality of properties and buildings including the building, and receiving additional second user input via the GUI to zoom in on the building, and wherein the controlling of the presentation of the one or more new images is performed in response to the additional user input; or
presenting, by the one or more computing devices and after the presenting of the one new image, a further new image from an interior of the building in response to additional third user input to transition from one indicated 3D view location and orientation.

A12. The computer-implemented method of any one of clauses A01-A11 wherein the automated operations further include at least one of:
generating, by the one or more computing devices and in response to additional first user input received via the GUI, a volumetric model of the exterior with associated absolute location data based at least in part on further first data about the building that is captured during the capture of the plurality of images and that includes depth data to the exterior and absolute location data from each of the 3D capture locations and orientations, and presenting a map of a geographical area that includes multiple properties and on which the volumetric model is overlaid using the associated absolute location data; or
generating, by the one or more computing devices and in response to additional second user input received via the GUI, a model of the building based on further second data about the building that is captured during the capture of the plurality of images and that includes energy readings for one or more types of energy other than visible light from each of the 3D capture locations and orientations, and presenting information for the building based on at least some of the energy readings.

A13. The computer-implemented method of any one of clauses A01-A12 wherein the presenting of the one new image in the GUI further includes overlaying, on the one new image, one or more visual indications of one or more point-of-interest attributes of the building at one or more locations on the presented one new image associated with the one or more point-of-interest attributes, and wherein the automated operations further include at least one of:
receiving, by the one or more computing devices, further user input via the GUI to select one of the one or more point-of-interest attributes; and
presenting, by the one or more computing devices, further information about the selected one point-of-interest attribute.

A14. The computer-implemented method of any one of clauses A01-A13 wherein the automated operations further include analyzing the plurality of images to identify a plurality of visible attributes of the building,
wherein the generating of the 3D spatial radiance field model includes associating the plurality of visible attributes of the building with respective surfaces of the exterior of the building, and
wherein the automated operations further include:
   receiving, by the one or more computing devices, further user input that describes one or more of the plurality of visible attributes; and
   presenting, by the one or more computing devices, further information about the one or more visible attributes.

A15. The computer-implemented method of any one of clauses A01-A14 wherein the automated operations further include at least one of:
blocking, by the one or more computing devices and in response to additional first user input received via the GUI that indicates a further 3D view location and orientation that satisfies one or more blocking criteria, presentation of a further new image from the further 3D view location and orientation; or
presenting, by the one or more computing and in response to additional second user input received via the GUI, one or more video clips generated using additional visual data captured with the plurality of images;
generating, by the one or more computing devices, one or more image sequences each having a sequence of multiple new images generated using the 3D spatial radiance field model, and presenting, in response to additional third user input received via the GUI, the sequence of multiple new images for each of at least one of the image sequences; or
generating, by the one or more computing devices, a model of the exterior showing a 3D mesh having interconnected vertices and edges and faces, and presenting, in response to additional fourth user input received via the GUI, the 3D mesh for at least some of the exterior.

A16. The computer-implemented method of any one of clauses A01-A15 wherein the generated 3D spatial radiance field model is a 3D Gaussian Splat model, wherein the limiting of the virtual movement to the two degrees of freedom includes providing a first type of virtual movement that is substantially horizontal and lateral to the exterior and providing a second type of virtual movement that is substantially vertical, wherein the capture of the plurality of images further includes capturing some images of the plurality of images during at least one of ascent, of a flying drone device having at least one camera of the one or more cameras, between the ground surface and a highest of the multiple heights or descent of the flying drone device between the highest of the multiple heights and the ground surface, and wherein the method further comprises:
directing, by the one or more computing devices, capture of a plurality of additional images of the exterior of the building from a camera of the one or more cameras moved along the ground surface at one or more additional heights, and wherein the generating of the 3D spatial radiance field model includes generating the 3D Gaussian Splat model based upon a combination of the plurality of images and the plurality of additional images; and
presenting, by the one or more computing devices and via the displayed GUI, further new images from further indicated 3D view locations and orientations proximate to the ground surface, including receiving virtual horizontal movements for at least some of the further indicated 3D view locations and orientations that are at least one of towards the exterior or away from the exterior, and generating the further new images from the further indicated 3D view locations and orientations by the generated 3D Gaussian Splat model.

A17. The computer-implemented method of any one of clauses A01-A16 wherein the multiple traversals includes at least a first substantially horizontal traversal at a first height above the ground surface and a first distance from the exterior, and a second substantially horizontal traversal at a second height above the ground surface that is larger than the first height and at a second distance from the exterior that is larger than the first distance, and a third substantially horizontal traversal at a third height above the ground surface that is larger than the second height and at a third distance from the exterior that is larger than the second distance, and wherein the method further comprises:
directing, by one or more computing devices, capture of a plurality of additional images of the exterior of the building separate from the multiple traversals and at one or more additional distances from the exterior separate from the multiple distances, and wherein the generating of the 3D spatial radiance field model includes generating the 3D spatial radiance field model based upon a combination of the plurality of images and the plurality of additional images; and
controlling, by the one or more computing devices and via the displayed GUI, presentation of a further new image from a further indicated 3D view location and orientation, including:
   overriding, by the one or more computing devices and via additional user input via the GUI, the limiting of the virtual movement to the two degrees of freedom, including enabling three or more degrees of freedom for changes in view locations and orientations;
   generating, by the one or more computing devices and based on further user input that selects the further indicated 3D view location and orientation using the enabled three or more degrees of freedom, and using the generated 3D spatial radiance field model, the further new image from the further indicated 3D view location and orientation; and
   presenting, by the one or more computing devices, the further new image in the GUI.

A18. The computer-implemented method of any one of clauses A01-A17 wherein the generated 3D spatial radiance field model is a 3D Gaussian Splat model,
wherein the capture of the one or more first subsets of images from the one or more cameras moved along the ground surface includes capturing images of the or more first subsets at multiple additional distances from the exterior of the building from a single one of one or more first heights, including to capture one or more first images that are each from a respective first 3D capture location and orientation of the plurality of 3D capture locations and that each has visual coverage of all of the exterior visible from the location of that respective first 3D capture location and orientation, and including to capture one or more second images that are each from a respective second 3D capture location and orientation of the plurality of 3D capture locations and that each has visual coverage of less than all of the exterior visible from the location of that respective second 3D capture location and orientation;
wherein the capture of the plurality of images further includes capturing some images of the plurality of images during at least one of ascent of the flying drone device between the ground surface and a highest of the multiple heights or descent of the flying drone device between the highest of the multiple heights and the ground surface,
wherein the multiple second traversals are each a horizontal traversal at substantially a respective one of the multiple heights and at substantially a respective one of the multiple distances during the second traversal to one or more points on one of an actual surface of the exterior or a virtual surface on a vertical projection of the exterior in air space above the exterior, and
wherein the respective one distance for a horizontal traversal increases as the respective one height for that horizontal traversal increases.

A19. The computer-implemented method of any one of clauses A01-A18 wherein the automated operations further include:
controlling, via a displayed graphical user interface (GUI), presentation of a new image of some of the exterior of the building from an indicated 3D view location and orientation that is distinct from the plurality of 3D capture locations and orientations, the controlling including:
restricting virtual movement via the GUI from a current 3D view location and orientation, including limiting the virtual movement to have two degrees of freedom for changing view locations and orientations while being centered on one or more building positions;
generating, based on the virtual movement ending at the indicated 3D view location and orientation and using the generated 3D spatial radiance field model, the new image from the indicated 3D view location and orientation; and
presenting the new image in the GUI.

A20. The computer-implemented method of any one of clauses A01-A19 wherein the automated operations further include at least one of:
capturing multiple additional images outwards from the exterior of the building towards surroundings of the building, generating a second 3D spatial radiance field model that encodes visual appearances of a plurality of additional surfaces of at least some of the surroundings of the building based at least in part on analysis of visual data of the multiple additional images, generating one or more second new images of the at least some surroundings from the second 3D spatial radiance field model, and presenting the generated one or more second new images; or
capturing further first data about the building during the capture of the plurality of images that includes depth data to the exterior and includes absolute location data from each of the 3D capture locations and orientations, generating a volumetric model of the exterior with associated absolute location data based at least in part on the further first data, and presenting a map of a geographical area that includes multiple properties and on which the volumetric model is overlaid using the associated absolute location data; or
capturing further second data about the building during the capture of the plurality of images that includes energy readings for one or more types of energy other than visible light from each of the 3D capture locations and orientations, and presenting information for the building based on at least some of the energy readings; or
capturing, for one or more additional structures that are on a property on which the building is located and that are separate from the building, multiple further images of the one or more additional structures from multiple 3D capture locations and orientations, generating one or more third 3D spatial radiance field models that encode visual appearances of multiple other surfaces on the one or more additional structures based at least in part on analysis of visual data of the multiple further images, generating one or more third new images of at least one of the additional structures from the third 3D spatial radiance field model, and presenting the generated one or more third new images.

A21. A computer-implemented method comprising multiple steps to perform automated operations that implement described techniques substantially as disclosed herein.

B01. A non-transitory computer-readable medium having stored executable software instructions and/or other stored contents that cause one or more computing systems to perform automated operations that implement the method of any of clauses A01-A21.

B02. A non-transitory computer-readable medium having stored executable software instructions and/or other stored contents that cause one or more computing systems to perform automated operations that implement described techniques substantially as disclosed herein.

C01. One or more computing systems comprising one or more hardware processors and one or more memories with stored instructions that, when executed by at least one of the one or more hardware processors, cause the one or more computing systems to perform automated operations that implement the method of any of clauses A01-A21.

C02. One or more computing systems comprising one or more hardware processors and one or more memories with stored instructions that, when executed by at least one of the one or more hardware processors, cause the one or more computing systems to perform automated operations that implement described techniques substantially as disclosed herein.

D01. A computer program adapted to perform the method of any of clauses A01-A21 when the computer program is run on a computer.

Aspects of the present disclosure are described herein with reference to flowchart illustrations and/or block diagrams of methods, apparatus (systems), and computer program products according to the present disclosure. It will be appreciated that each block of the flowchart illustrations and/or block diagrams, and combinations of blocks in the flowchart illustrations and/or block diagrams, can be implemented by computer readable program instructions. It will be further appreciated that in some implementations the functionality provided by the routines discussed above may be provided in alternative ways, such as being split among more routines or consolidated into fewer routines. Similarly, in some implementations illustrated routines may provide more or less functionality than is described, such as when other illustrated routines instead lack or include such functionality respectively, or when the amount of functionality that is provided is altered. In addition, while various operations may be illustrated as being performed in a particular manner (e.g., in serial or in parallel, or synchronous or asynchronous) and/or in a particular order, in other implementations the operations may be performed in other orders and in other manners. Any data structures discussed above may also be structured in different manners, such as by having a single data structure split into multiple data structures and/or by having multiple data structures consolidated into a single data structure. Similarly, in some implementations illustrated data structures may store more or less information than is described, such as when other illustrated data structures instead lack or include such information respectively, or when the amount or types of information that is stored is altered.

From the foregoing it will be appreciated that, although specific examples have been described herein for purposes of illustration, various modifications may be made without deviating from the spirit and scope of the invention. Accordingly, the invention is not limited except as by corresponding claims and the elements recited by those claims. In addition, while certain aspects of the invention may be presented in certain claim forms at certain times, the inventors contemplate the various aspects of the invention in any available claim form. For example, while only some aspects of the invention may be recited as being embodied in a computer-readable medium at particular times, other aspects may likewise be so embodied.

## Claims

1. A non-transitory computer-readable medium having stored contents that cause one or more computing devices to perform automated operations including at least:
obtaining, by the one or more computing devices, a plurality of images of an exterior of a building that are captured from a plurality of three-dimensional (3D) capture locations and orientations around at least some of the exterior;
generating, by the one or more computing devices and based at least in part on analysis of visual data of the plurality of images, a 3D spatial radiance field model that encodes visual appearances of a plurality of surfaces of the exterior of the building; and
controlling, by the one or more computing devices and via a displayed graphical user interface (GUI), presentation of one or more new images from one or more indicated 3D view locations and orientations, wherein at least one of the indicated 3D view locations and orientations is distinct from the plurality of 3D capture locations and orientations, and wherein the controlling includes:
presenting, by the one or more computing devices, a first image of some of the exterior of the building from a first 3D view location and orientation;
restricting, by the one or more computing devices, virtual movement via the GUI from the first 3D view location and orientation to one of the indicated 3D view locations and orientations that is selected via user input, including limiting, from six degrees of freedom available for changes in view locations and orientations, the virtual movement to two degrees of freedom and to be centered on one or more building positions;
generating, by the one or more computing devices and using the generated 3D spatial radiance field model, one of the new images from the one indicated 3D view location and orientation; and
presenting, by the one or more computing devices, the one new image in the GUI.

2. The non-transitory computer-readable medium of claim 1 wherein the automated operations further include directing capture of the plurality of images to collectively include visual coverage of substantially all of the exterior, the capture including capturing one or more first subsets of the plurality of images from one or more cameras moved along a ground surface around the exterior at one or more first heights during one or more first traversals of at least some of the exterior, and further including capturing second subsets of the plurality of images during multiple second traversals by a flying drone device with at least one camera around at least some of the exterior at multiple distances from at least one building position and at multiple heights above the ground surface.

3. The non-transitory computer-readable medium of claim 1 wherein the limiting of the virtual movement to the two degrees of freedom includes enabling movement along a substantially conical shape having a vertical axis that is perpendicular to a ground surface and passes through the building and having an increasing horizontal circumference as height above the ground surface increases, including providing a first type of virtual movement that is substantially horizontal and lateral to the exterior along a surface of the substantially conical shape and providing a second type of virtual movement that is vertical along the surface of the substantially conical shape and in which distance from the exterior increases as a height above the ground surface.

4. The non-transitory computer-readable medium of claim 1 wherein the generated 3D spatial radiance field model is a 3D Gaussian Splat model, and wherein the limiting of the virtual movement to the two degrees of freedom includes providing a first type of virtual movement that is substantially horizontal and lateral to the exterior and providing a second type of virtual movement that simultaneously changes height above a ground surface and distance from the exterior and a view orientation to maintain centering on the one or more building positions.

5. The non-transitory computer-readable medium of claim 1 wherein the limiting of the virtual movement to the two degrees of freedom includes providing a first type of virtual movement that is substantially horizontal and towards or away from the exterior and providing a second type of virtual movement that is substantially horizontal and lateral to the exterior.

6. The non-transitory computer-readable medium of claim 1 wherein the automated operations further include:
overriding, by the one or more computing devices and via additional user input via the GUI, the limiting of the virtual movement to the two degrees of freedom, including enabling three or more degrees of freedom for changes in view locations and orientations;
generating, by the one or more computing devices and based on further user input that selects a further indicated 3D view location and orientation using the enabled three or more degrees of freedom, and using the generated 3D spatial radiance field model, a further new image from the further indicated 3D view location and orientation; and
presenting, by the one or more computing devices, the further new image in the GUI.

7. The non-transitory computer-readable medium of claim 1 wherein the automated operations further include:
generating, by the one or more computing devices and using multiple additional images with visual coverage directed outwards from the exterior of the building towards surroundings of the building, a second 3D spatial radiance field model that encodes visual appearances of a plurality of additional surfaces of at least some of the surroundings of the building based at least in part on analysis of visual data of the multiple additional images;
generating, by the one or more computing devices and using the second 3D spatial radiance field model, one or more second new images of the at least some surroundings; and
presenting, by the one or more computing devices, the generated one or more second new images.

8. The non-transitory computer-readable medium of claim 1 wherein the automated operations further include:
generating, by the one or more computing devices and using multiple additional images with visual coverage of one or more additional structures that are on a property on which the building is located and that are separate from the building, a second 3D spatial radiance field model that encodes visual appearances of a plurality of additional surfaces on the one or more additional structures based at least in part on analysis of visual data of the multiple additional images;
generating, by the one or more computing devices and using the second 3D spatial radiance field model, one or more second new images of at least one of the additional structures; and
presenting, by the one or more computing devices, the generated one or more second new images.

9. The non-transitory computer-readable medium of claim 1 wherein the automated operations further include at least one of:
generating, by the one or more computing devices and in response to additional first user input received via the GUI, an additional one of the one or more new images, and presenting the additional new image, wherein the plurality of images includes one or more first subsets from one or more cameras moved along a ground surface around the exterior at one or more first heights during one or more first traversals of at least some of the exterior, and further includes second subsets during multiple second traversals by a flying drone device with at least one camera around at least some of the exterior at multiple distances from at least one building position and at multiple heights above the ground surface that are above the one or more first heights, wherein the one indicated 3D view location and orientation for the one new image is from a height above the ground surface that is above a lowest of the multiple heights, and wherein the additional one new image is from an additional indicated 3D view location and orientation that is below a highest of the one or more first heights; or
presenting, by the one or more computing devices, an initial image that shows a plurality of properties and buildings including the building, and receiving additional second user input via the GUI to zoom in on the building, and wherein the controlling of the presentation of the one or more new images is performed in response to the additional user input; or
presenting, by the one or more computing devices and after the presenting of the one new image, a further new image from an interior of the building in response to additional third user input to transition from one indicated 3D view location and orientation.

10. The non-transitory computer-readable medium of claim 1 wherein the automated operations further include at least one of:
generating, by the one or more computing devices and in response to additional first user input received via the GUI, a volumetric model of the exterior with associated absolute location data based at least in part on further first data about the building that is captured during the capture of the plurality of images and that includes depth data to the exterior and absolute location data from each of the 3D capture locations and orientations, and presenting a map of a geographical area that includes multiple properties and on which the volumetric model is overlaid using the associated absolute location data; or
generating, by the one or more computing devices and in response to additional second user input received via the GUI, a model of the building based on further second data about the building that is captured during the capture of the plurality of images and that includes energy readings for one or more types of energy other than visible light from each of the 3D capture locations and orientations, and presenting information for the building based on at least some of the energy readings.

11. The non-transitory computer-readable medium of claim 1 wherein the presenting of the one new image in the GUI further includes overlaying, on the one new image, one or more visual indications of one or more point-of-interest attributes of the building at one or more locations on the presented one new image associated with the one or more point-of-interest attributes, and wherein the automated operations further include at least one of:
receiving, by the one or more computing devices, further user input via the GUI to select one of the one or more point-of-interest attributes; and
presenting, by the one or more computing devices, further information about the selected one point-of-interest attribute.

12. The non-transitory computer-readable medium of claim 1 wherein the automated operations further include analyzing the plurality of images to identify a plurality of visible attributes of the building,
wherein the generating of the 3D spatial radiance field model includes associating the plurality of visible attributes of the building with respective surfaces of the exterior of the building, and
wherein the automated operations further include:
receiving, by the one or more computing devices, further user input that describes one or more of the plurality of visible attributes; and
presenting, by the one or more computing devices, further information about the one or more visible attributes.

13. The non-transitory computer-readable medium of claim 1 wherein the automated operations further include at least one of:
blocking, by the one or more computing devices and in response to additional first user input received via the GUI that indicates a further 3D view location and orientation that satisfies one or more blocking criteria, presentation of a further new image from the further 3D view location and orientation; or
presenting, by the one or more computing and in response to additional second user input received via the GUI, one or more video clips generated using additional visual data captured with the plurality of images;
generating, by the one or more computing devices, one or more image sequences each having a sequence of multiple new images generated using the 3D spatial radiance field model, and presenting, in response to additional third user input received via the GUI, the sequence of multiple new images for each of at least one of the image sequences; or
generating, by the one or more computing devices, a model of the exterior showing a 3D mesh having interconnected vertices and edges and faces, and presenting, in response to additional fourth user input received via the GUI, the 3D mesh for at least some of the exterior.

14. A computer-implemented method comprising:
directing, by one or more computing devices, capture of a plurality of images of an exterior of a building from a plurality of three-dimensional (3D) capture locations and orientations, the capture including capturing subsets of the plurality of images during each of multiple traversals by one or more cameras around at least some of the exterior at a respective one of multiple distances from at least one building position and a respective one of multiple heights above a ground surface around the exterior, wherein the respective one distance for a horizontal traversal increases as the respective one height for that horizontal traversal increases;
generating, by the one or more computing devices and based at least in part on analysis of visual data of the plurality of images, a 3D spatial radiance field model that encodes visual appearances of a plurality of surfaces of the exterior of the building; and
controlling, by the one or more computing devices and via a displayed graphical user interface (GUI), presentation of a plurality of new images of the exterior of the building from a plurality of indicated 3D view locations and orientations, at least some of the plurality of indicated 3D view locations and orientations being distinct from the plurality of 3D capture locations and orientations, and the controlling including, for each of the plurality of new images:
restricting, by the one or more computing devices, virtual movement via the GUI from a current 3D view location and orientation to a respective one of the plurality of indicated 3D view locations and orientations, including limiting, from six degrees of freedom available for changing view locations and orientations, the virtual movement to two degrees of freedom while being centered on one or more building positions;
generating, by the one or more computing devices and based on user input that selects the respective one indicated 3D view location and orientation, and using the generated 3D spatial radiance field model, that new image from that respective one indicated 3D view location and orientation; and
presenting, by the one or more computing devices, that new image in the GUI.

15. A system comprising:
one or more hardware processors of one or more computing devices; and
one or more memories with stored instructions that, when executed by at least one of the one or more hardware processors, cause at least one of the one or more computing devices to perform automated operations including at least:
directing capture of a plurality of images of an exterior of a building that are from a plurality of three-dimensional (3D) capture locations and orientations and that each shows some of the exterior and that collectively include visual coverage of substantially all of the exterior, the capture including capturing one or more first subsets of the plurality of images from one or more cameras moved along a ground surface around the exterior at one or more first heights during one or more first traversals of at least some of the exterior, and further including capturing second subsets of the plurality of images during multiple second traversals by a flying drone device with at least one camera around at least some of the exterior at multiple distances from at least one building position and at multiple heights above the ground surface;
generating, based at least in part on analysis of visual data of the plurality of images, a 3D spatial radiance field model that encodes visual appearances of a plurality of surfaces of the exterior of the building; and
providing the generated 3D spatial radiance field model for use in generating new images of the exterior of the building from new indicated 3D view locations and orientations that are separate from the plurality of 3D capture locations and orientations.
